(19) Europäisches Patentamt
European Patent Office
Office européen des brevets

(11) **EP 4 770 187 A1**

(12) **EUROPEAN PATENT APPLICATION**
published in accordance with Art. 153(4) EPC

(43) Date of publication:
**01.07.2026 Bulletin 2026/27**

(21) Application number: **24864590.5**

(22) Date of filing: **09.09.2024**

(51) International Patent Classification (IPC):
**H04W 28/04** (2009.01)

(52) Cooperative Patent Classification (CPC):
**H04L 1/00; H04W 28/04**

(86) International application number:
**PCT/CN2024/117841**

(87) International publication number:
**WO 2025/055870 (20.03.2025 Gazette 2025/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **13.09.2023 CN 202311187960**

(71) Applicant: HUAWEI TECHNOLOGIES CO., LTD.
**Shenzhen 518129 (CN)**

(72) Inventors:
• XIANG, Hongyu
  **Shenzhen, Guangdong 518129 (CN)**
• CHEN, Lei
  **Shenzhen, Guangdong 518129 (CN)**
• QIN, Yi
  **Shenzhen, Guangdong 518129 (CN)**

(74) Representative: **Maiwald GmbH**
**Engineering**
**Elisenhof**
**Elisenstrasse 3**
**80335 München (DE)**

(54) **COMMUNICATION METHOD AND APPARATUS**

(57) This application relates to the field of communication technologies, and discloses a communication method and apparatus. The method includes: An access stratum of a first device receives a first bit set, a second bit set, first check information, and second check information from a second device; performs integrity check on the first bit set based on the first check information and a first threshold; and performs integrity check on the second bit set based on the second check information. According to the foregoing method, the access stratum of the first device may separately check the first bit set (an error-tolerant bit set) and the second bit set (a non-error-tolerant bit set), so that a feedback delay or a retransmission delay is reduced while an error tolerance requirement is met, thereby improving user experience.

FIG. 4A

**Description**

CROSS-REFERENCE TO RELATED APPLICATIONS

This application claims priority to Chinese Patent Application No. 202311187960.9, filed with the China National Intellectual Property Administration on September 13, 2023 and entitled "COMMUNICATION METHOD AND APPARATUS", which is incorporated herein by reference in its entirety.

TECHNICAL FIELD

This application relates to the field of communication technologies, and in particular, to a communication method and apparatus.

BACKGROUND

Semantic communication is a scientific research direction that integrates communication and deep learning and that emerges with development of deep learning, and has rapidly grown in recent years.
Shannon proposes the classical information theory, and all communication modes that reply on accurate reproduction of bit stream transmission are limited by the channel capacity limit of Shannon's law. However, in existing communication scenarios, current wired and wireless networks start to face a challenge of exponential growth in data traffic. In this context, various industries begin to attach importance to integration of semantic communication theories and technologies with intelligent application scenarios and pay attention to underlying "meaning" of information. Different from a conventional communication system, whose main task is to achieve accurate transmission of bit-level or symbol-level information, a semantic communication system focuses on how a transmitted symbol can accurately convey an intended meaning.
Therefore, in a semantic communication scenario, how to evaluate whether data transmission succeeds or fails still needs to be further studied.

SUMMARY

This application provides a communication method and apparatus, to separately check a first bit set and a second bit set at an access stratum, so that a feedback delay or a retransmission delay is reduced while an error tolerance requirement is met, thereby improving user experience.
According to a first aspect, this application provides a communication method. The method may be applied to a receive end, a processor, a chip, a chip system (for example, a system-on-a-chip (system-on-a-chip, SoC)), a functional module, or the like in the receive end. For example, the method is applied to a receive end and the receive end is a first device. An access stratum of the first device receives a first bit set, a second bit set, first check information, and second check information from a second device; performs integrity check on the first bit set based on the first check information and a first threshold; and performs integrity check on the second bit set based on the second check information. For example, an error-tolerant bit set may accept a transmission error corresponding to the first threshold, and a non-error-tolerant bit set requires that the entire set be correctly transmitted.
According to the foregoing method, the access stratum of the first device may separately check the first bit set (the error-tolerant bit set) and the second bit set (the non-error-tolerant bit set), so that a feedback delay or a retransmission delay is reduced while an error tolerance requirement is met, thereby improving user experience.
In a possible design, the method further includes: obtaining the first threshold or a plurality of thresholds from a non-access stratum of the first device, where the plurality of thresholds are used to determine the first threshold; or receiving the first threshold or the plurality of thresholds from a core network device; or receiving the first threshold or the plurality of thresholds from the second device.
In this way, the access stratum of the first device may obtain the first threshold in the foregoing manner, to perform integrity check on the first bit set based on the first threshold and the first check information.
In a possible design, the first bit set includes data bits of a plurality of services, and the plurality of thresholds include thresholds respectively corresponding to the plurality of services.
Because different services may correspond to different thresholds (that is, error tolerance capabilities), the first threshold may be related to a service corresponding to the first bit set, so that the integrity of the first bit set can be checked in a targeted manner based on the service corresponding to the first bit set.
In a possible design, performing integrity check on the first bit set based on the first check information and the first threshold includes: performing integrity check on the first bit set based on the first check information, to obtain a check value of the first bit set; and determining a check result of the first bit set based on the check value of the first bit set and the first threshold. If the check value of the first bit set does not reach the first threshold, the check result of the first bit set is that the integrity check on the first bit set succeeds; or if the check value of the first bit set reaches the first threshold, the check result of the first bit set is that the integrity check on the first bit set fails.

In a possible design, the first bit set includes a plurality of groups, the first check information includes check information respectively corresponding to the plurality of groups, and the plurality of groups include a first group; and performing integrity check on the first bit set based on the first check information, to obtain the check value of the first bit set includes: performing integrity check on the first group based on the check information corresponding to the first group, to obtain a check value of the first group; and obtaining the check value of the first bit set based on the check value of the first group.

In this way, the first bit set is divided into the plurality of groups, and the check value of the first bit set is obtained through calculation based on check values of these groups, so that error tolerance determining is implemented while the integrity of the first bit set is quickly checked.

In a possible design, the first check information is a padding bit sequence; and performing integrity check on the first bit set based on the first check information and the first threshold includes: performing integrity check on the padding bit sequence, to obtain a check value of the padding bit sequence; and determining a check result of the first bit set based on the check value of the padding bit sequence and the first threshold. If the check value of the padding bit sequence does not reach the first threshold, the check result of the first bit set is that the integrity check on the first bit set succeeds; or if the check value of the padding bit sequence reaches the first threshold, the check result of the first bit set is that the integrity check on the first bit set fails.

For example, the padding bit sequence is a preset bit sequence (for example, an all-0 sequence or an all-1 sequence), and a length of the padding bit sequence is less than a length of the first bit set. Therefore, it is relatively simple to determine the check value of the padding bit sequence, so that error tolerance determining is implemented while the integrity of the first bit set is quickly checked.

In a possible design, performing integrity check on the second bit set based on the second check information includes: performing integrity check on the second bit set based on the second check information, to obtain a check value of the second bit set; and determining a check result of the second bit set based on the check value of the second bit set. If the check value of the second bit set is a first check value, the check result of the second bit set is that the integrity check on the second bit set succeeds; or if the check value of the second bit set is a second check value, the check result of the second bit set is that the integrity check on the second bit set fails.

In a possible design, receiving the first bit set, the second bit set, the first check information, and the second check information from the second device includes: receiving a transport block from the second device, where the transport block includes the first bit set, the second bit set, the first check information, and the second check information.

In a possible design, receiving the first bit set, the second bit set, the first check information, and the second check information from the second device includes: receiving a transport block and check information from the second device, where the transport block includes the first bit set and the second bit set, and the check information includes the first check information and the second check information; or the transport block includes the first bit set, the second bit set, and the first check information, and the check information includes the second check information.

In a possible design, the method further includes: sending first feedback information to the second device if the integrity check on the first bit set succeeds and the integrity check on the second bit set succeeds, where the first feedback information indicates that transmission of a protocol data unit PDU succeeds, and the PDU includes the first bit set; or sending second feedback information to the second device if the integrity check on the first bit set fails or the integrity check on the second bit set fails, where the second feedback information indicates that the transmission of the PDU fails.

According to a second aspect, this application provides a communication method. The method may be applied to a transmit end, a processor, a chip, a chip system, a functional module, or the like in the transmit end. For example, the method is applied to a transmit end and the transmit end is a second device. An access stratum of the second device generates first check information and second check information, where the first check information and a first threshold are used to perform integrity check on a first bit set, and the second check information is used to perform integrity check on a second bit set; and sends the first bit set, the second bit set, the first check information, and the second check information.

In a possible design, the method further includes: sending the first threshold or a plurality of thresholds to a first device, where the plurality of thresholds are used to determine the first threshold.

In a possible design, the first bit set includes data bits of a plurality of services, and the plurality of thresholds include thresholds respectively corresponding to the plurality of services.

In a possible design, the first bit set includes a plurality of groups, and the first check information includes check information respectively corresponding to the plurality of groups; or the first check information is a padding bit sequence.

In a possible design, sending the first bit set, the second bit set, the first check information, and the second check information includes: sending a transport block, where the transport block includes the first bit set, the second bit set, the first check information, and the second check information.

In a possible design, sending the first bit set, the second bit set, the first check information, and the second check information includes: sending a transport block and check information, where the transport block includes the first bit set and the second bit set, and the check information includes the first check information and the second check information; or the transport block includes the first bit set, the second bit set, and the first check information, and the check information includes the second check information.

In a possible design, the first bit set includes a plurality of bits in a first data packet; and the method further includes: receiving the first data packet, where the first data packet includes indication information, and the indication information indicates locations of the plurality of bits in the first data packet.

In a possible design, the indication information is carried in a header of the first data packet.

The communication method provided in the second aspect corresponds to the communication method provided in the first aspect. For beneficial effects of related technical features in the second aspect, refer to the descriptions in the first aspect. Details are not described again.

According to a third aspect, this application provides a communication apparatus. The communication apparatus has a function for implementing the first aspect or the second aspect. For example, the communication apparatus includes a corresponding module, unit, or means for performing an operation in the first aspect or the second aspect. The function, the unit, or the means may be implemented by software, or may be implemented by hardware, or may be implemented by hardware executing corresponding software.

In a possible design, the communication apparatus includes a processing unit and a communication unit. The communication unit may be configured to receive and send a signal, to implement communication between the communication apparatus and another apparatus. For example, the communication unit is configured to send system information to a terminal. The processing unit may be configured to perform some internal operations of the communication apparatus. Functions performed by the processing unit and the communication unit may correspond to operations in the first aspect or the second aspect.

In a possible design, the communication apparatus includes a processor, and the processor may be configured to be coupled to a memory. The memory may store a computer program or instructions necessary for implementing the functions in the first aspect or the second aspect. The processor may execute the computer program or the instructions stored in the memory. When the computer program or the instructions are executed, the communication apparatus is enabled to implement the method according to any possible design or implementation of the first aspect or the second aspect.

In a possible design, the communication apparatus includes a processor and a memory. The memory may store a necessary computer program or necessary instructions to implement the functions in the first aspect or the second aspect. The processor may execute the computer program or the instructions stored in the memory. When the computer program or the instructions are executed, the communication apparatus is enabled to implement the method according to any possible design or implementation of the first aspect or the second aspect.

In a possible design, the communication apparatus includes a processor and an interface circuit. The processor is configured to communicate with another apparatus via the interface circuit, and perform the method according to any possible design or implementation of the first aspect or the second aspect.

It may be understood that in the third aspect, the processor may be implemented by hardware or software. When the processor is implemented by the hardware, the processor may be a logic circuit, an integrated circuit, or the like. When the processor is implemented by the software, the processor may be a general-purpose processor, and is implemented by reading software code stored in the memory. In addition, there may be one or more processors, and one or more memories. The memory may be integrated with the processor, or the memory and the processor are disposed separately. In a specific implementation process, the memory and the processor may be integrated into one chip, or may be disposed on different chips. A type of the memory and a manner in which the memory and the processor are disposed are not limited in embodiments of this application.

According to a fourth aspect, this application provides a communication system. The communication system may include a first communication apparatus and a second communication apparatus. The first communication apparatus is configured to perform the method according to the first aspect, and the second communication apparatus is configured to perform the method according to the second aspect.

According to a fifth aspect, this application provides a computer-readable storage medium, where the computer storage medium stores a computer program (or computer readable instructions), and when a computer reads and executes some or all of the computer readable instructions, the method according to any one of the possible designs of the first aspect or the second aspect is performed.

For example, the computer-readable storage medium may be any usable medium that can be accessed by the computer. By way of example but not limitation, the computer-readable medium may include a non-transitory computer-readable medium, a random access memory (random access memory, RAM), a read-only memory (read-only memory, ROM), an electrically erasable programmable read-only memory (electrically EPROM, EEPROM), a CD-ROM or another optical disk storage, a magnetic disk storage medium or another magnetic storage device, or any other medium that can carry or store desired program code in a form of instructions or a data structure and that can be accessed by the computer.

According to a sixth aspect, this application provides a computer program product. When a computer reads and executes the computer program product, the method according to any one of the possible designs of the first aspect or the second aspect is performed.

According to a seventh aspect, this application provides a chip (or a chip system). The chip includes a processor, the processor is coupled to a memory, the memory stores a computer program, and the processor is configured to invoke some or all of computer programs in the memory, so that the method according to any one of the possible designs of the first aspect or the second aspect is performed.

## BRIEF DESCRIPTION OF DRAWINGS

FIG. 1 is a diagram of a network architecture to which an embodiment of this application is applicable;
FIG. 2A is an example diagram of a protocol layer structure according to an embodiment of this application;
FIG. 2B is a diagram of a structure of a GTP-U data packet according to an embodiment of this application;
FIG. 3A is an example diagram of an access network protocol layer structure according to an embodiment of this application;
FIG. 3B is a diagram of data transmission between access strata according to an embodiment of this application;
FIG. 4A is a schematic flowchart corresponding to a communication method according to an embodiment of this application;
FIG. 4B is a diagram of check information corresponding to a group according to an embodiment of this application;
FIG. 4C is a diagram of a padding bit sequence according to an embodiment of this application;
FIG. 5 is a schematic flowchart corresponding to a communication method according to an embodiment of this application;
FIG. 6 is a schematic flowchart corresponding to a communication method according to an embodiment of this application;
FIG. 7 is a diagram of a communication process according to an embodiment of this application;
FIG. 8 is a schematic flowchart corresponding to a communication method according to an embodiment of this application;
FIG. 9 is a possible example block diagram of an apparatus according to an embodiment of this application; and
FIG. 10 is a diagram of a structure of a communication apparatus according to an embodiment of this application.

## DESCRIPTION OF EMBODIMENTS

The following describes technical solutions in embodiments of this application with reference to accompanying drawings in embodiments of this application. The technical solutions in the embodiments of this application may be applied to various communication systems, such as a universal mobile telecommunications system (universal mobile telecommunications system, UMTS), a wireless local area network (wireless local area network, WLAN), a wireless fidelity (wireless fidelity, Wi-Fi) system, a 4th generation (4th generation, 4G) mobile communication system, for example, a long term evolution (long term evolution, LTE) system, a 5th generation (5th generation, 5G) mobile communication system, for example, a new radio (new radio, NR) system, and a future evolved communication system, for example, a 6th generation (6th generation, 6G) mobile communication system.

Particularly, embodiments of this application are applicable to a semantic communication system. Different from a conventional communication system, whose main task is to achieve accurate transmission of bit-level or symbol-level information, in which a bit error rate (bit error rate, BER) or a symbol error rate (symbol error rate, SER) is a main performance indicator of the conventional communication system, a semantic communication system focuses on how a transmitted symbol can accurately convey an intended meaning. Currently, some video applications add forward error correction (forward error correction, FEC) codes to an application layer to provide error tolerance capabilities. The error tolerance capability may be understood as follows: A transmit end encodes an original information vector A into a latent representation vector B in a specified semantic feature domain (semantic feature domain). Through air interface transmission, a latent representation vector received by a receive end is B', and B ≠ B'. However, in the foregoing semantic feature domain, a Hamming distance between the latent representation vector B' received by the receive end and the latent representation vector B of the transmit end does not exceed a specified threshold $\varepsilon$, and the receive end may decode the received latent representation vector B' into A' through decoding, and A' = A. In this case, the error tolerance capability may be quantized as $\varepsilon$.

All aspects, embodiments, or features are presented in this application by describing a system that may include a plurality of devices, components, modules, and the like. It should be appreciated and understood that each system may include another device, component, module, and the like, and/or may not include all devices, components, modules, and the like discussed with reference to the accompanying drawings. In addition, a combination of these solutions may be used. In addition, in embodiments of this application, terms such as "example" and "for example" are used to give an example, an illustration, or a description. Any embodiment or design scheme described as an "example" in this application should not be explained as being more preferred or having more advantages than another embodiment or design scheme. Exactly, the term "example" is used to present a concept in a specific manner. In embodiments of this application, "of (of)", "relevant (corresponding, relevant)", and "corresponding (corresponding)" may be interchangeably used sometimes. It should be noted that meanings expressed by the terms are consistent when differences are not emphasized.

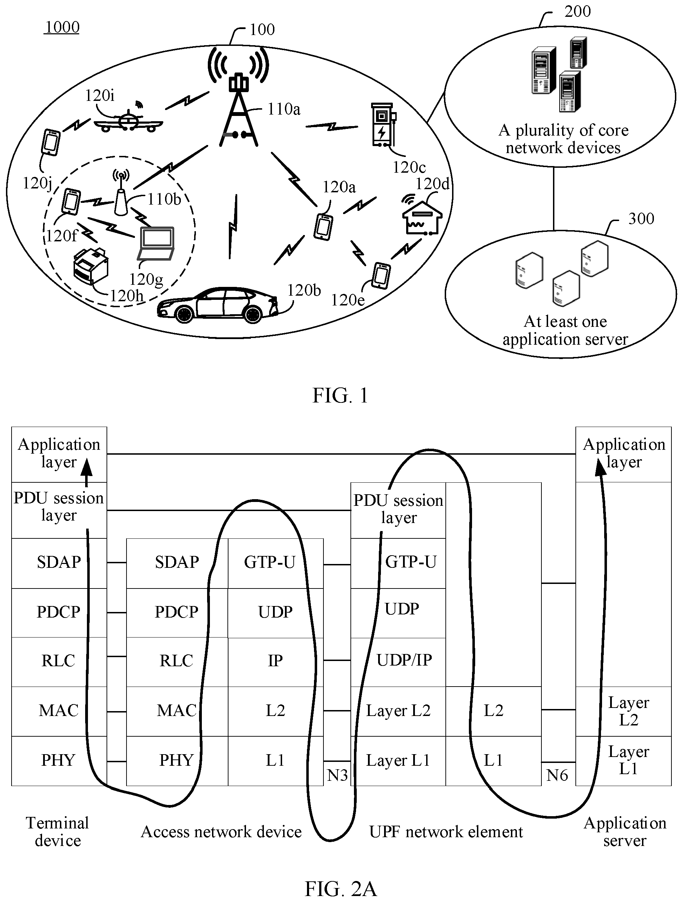

For ease of understanding embodiments of this application, a communication system shown in FIG. 1 is first used as an example to describe in detail a communication system applicable to embodiments of this application. As shown in FIG. 1, the communication system 1000 includes a radio access network (radio access network, RAN) 100 and a core network (core network, CN) 200. Optionally, the communication system 1000 may further include a data network (data network, DN) 300.

The following separately describes in detail the RAN 100, the CN 100, and the DN 300 in FIG. 1.

(1) RAN 100

The RAN 100 may include at least one radio access network device (which may also be referred to as an access network device, for example, 110a and 110b in FIG. 1), and may further include at least one terminal device (for example, 120a to 120j in FIG. 1). The terminal device may be connected to the radio access network device in a wireless manner. Terminal devices may be connected to each other in a wired or wireless manner, and access network devices may be connected to each other in a wired or wireless manner.

The access network device and the terminal device may be at fixed locations, or may be movable. The access network device and the terminal device may be deployed on land, including indoors or outdoors, or may be handheld or vehicle-mounted; or may be deployed on a water surface; or may be deployed on a plane, a balloon, or an artificial satellite in the air. Application scenarios of the access network device and the terminal device are not limited in embodiments of this application. Roles of the access network device and the terminal device may be relative. For example, a helicopter or an uncrewed aerial vehicle 120i in FIG. 1 may be configured as a mobile access network device. For the terminal device 120j that accesses the radio access network 100 via 120i, 120i is an access network device. However, for a first access network device 10a, 120i is a terminal device, that is, 110a and 120i communicate with each other by using a radio air interface protocol. Certainly, 110a and 120i may alternatively communicate with each other by using an interface protocol between access network devices. In this case, for 110a, 120i is also an access network device. Therefore, both the access network device and the terminal device may be collectively referred to as communication apparatuses. 110a and 110b in FIG. 1 may be referred to as communication apparatuses having a function of the access network device, and 120a to 120j in FIG. 1 may be referred to as communication apparatuses having a function of the terminal device.

(1.1) Terminal device

The terminal device may also be referred to as user equipment (user equipment, UE), a terminal, a user apparatus, an access terminal, a subscriber unit, a subscriber station, a mobile console, a mobile station (mobile station, MS), a remote station, a remote terminal, a mobile device, a user terminal, a terminal unit, a terminal station, a terminal apparatus, a wireless communication device, a user agent, or a user apparatus.

For example, the terminal device in embodiments of this application may be a mobile phone (mobile phone), a personal digital assistant (personal digital assistant, PDA) computer, a laptop computer (laptop computer), a tablet computer (Pad), an uncrewed aerial vehicle, a computer with wireless receiving and sending functions, a machine type communication (machine type communication, MTC) terminal device, a virtual reality (virtual reality, VR) terminal device, an augmented reality (augmented reality, AR) terminal device, an internet of things (internet of things, IoT) terminal device, a wireless terminal device in industrial control (industrial control), a wireless terminal device in self driving (self driving), a wireless terminal device in telemedicine (remote medical), a wireless terminal device in a smart grid (smart grid), a wireless terminal device in transportation safety (transportation safety), a wireless terminal device in a smart city (smart city), a wireless terminal device (for example, a game machine, a smart television, a smart speaker, a smart refrigerator, or fitness equipment) in a smart home (smart home), or a vehicle-mounted terminal device.

(1.2) Access network device

The access network device may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6G mobile communication system, a base station in a future mobile communication system, an access node in a Wi-Fi system, or the like. The access network device may be a macro base station, a micro base station or an indoor base station, a relay node or a donor node, or a radio controller in an open RAN (open RAN, O-RAN, or ORAN) or a cloud radio access network (cloud radio access network, CRAN) scenario. Optionally, the access network device may alternatively be a server, a wearable device, a vehicle, a vehicle-mounted device, or the like. For example, an access network device in a vehicle to everything (vehicle to everything, V2X) technology may be a road side unit (road side unit, RSU). All or a part of functions of the access network device in this application may alternatively be implemented through a software function running on hardware, or may be implemented through a virtualization function instantiated on a platform (for example, a cloud platform). The access network device in this application may alternatively be a logical node, a logical module, or software that can implement all or the part of the functions of the access network device.

In another possible scenario, a plurality of access network devices coordinate to assist the terminal device in implementing radio access, and different access network devices each implement a part of functions of a base station. For example, the access network device may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

In embodiments of this application, functions of the access network device may alternatively be executed by a module (for example, a chip) in the access network device, or may be executed by a control subsystem including the functions of the access network device. The control subsystem including the functions of the access network device herein may be a control center in the foregoing application scenarios such as the smart grid, the industrial control, the smart transportation, and the smart city. Functions of the terminal device may alternatively be performed by a module (for example, a chip or a modem) in the terminal device, or may be performed by an apparatus having the functions of the terminal.

(2) CN

The CN 200 may include a plurality of core network elements, and the radio access network device may be connected to the core network element in a wireless or wired manner. The core network element and the radio access network device may be different independent physical devices, or functions of the core network element and logical functions of the radio access network device may be integrated into a same physical device, or a part of functions of the core network element and a part of functions of the radio access network device may be integrated into one physical device.

In an example of a 5G communication system, the core network element in the CN 200 may include an access and mobility management function (access and mobility management function, AMF) network element, a session management function (session management function, SMF) network element, a user plane function (user plane function, UPF) network element, a policy control function (policy control function, PCF) network element, an application function (application function, AF) network element, and the like. For specific descriptions of the foregoing core network elements, refer to related technical specifications of 3GPP.

(3) DN 300

The DN 300 may also be referred to as a packet data network (packet data network, PDN), and is a network located outside an operator network. An application server corresponding to a plurality of services may be deployed in the DN 300, to provide a plurality of possible services for the terminal device.

It may be understood that solutions in embodiments of this application may be applicable to a plurality of possible communication systems, for example, a 5G communication system or a future 6G communication system. The foregoing network elements or functions may be network elements in a hardware device, may be software functions running on dedicated hardware, or may be virtualization functions instantiated on a platform (for example, a cloud platform). In addition, FIG. 1 is merely a diagram. The RAN of the communication system may further include another access network device, for example, may further include a wireless relay device and a wireless backhaul device.

In the network architecture shown in FIG. 1, a user plane data transmission channel may be established for the terminal device through a control plane signaling exchange procedure (for example, a protocol data unit (protocol data unit, PDU) session establishment procedure), so that the terminal device may perform data transmission with an application server deployed in the DN through the user plane data transmission channel. For example, the application server may send a downlink data packet to the terminal device, and a transmission path of the downlink data packet is: application server -> UPF network element -> access network device -> terminal device. Correspondingly, the terminal device may send an uplink data packet to the application server, and a transmission path of the uplink data packet is: terminal device -> access network device -> UPF network element -> application server.

FIG. 2A is an example diagram of a protocol layer structure. As shown in FIG. 2A, an access network protocol layer structure may be followed between a terminal device and an access network device. For descriptions of the access stratum protocol layer structure, refer to the following. A protocol layer structure between the access network device and a UPF network element may include a layer L1 (that is, a physical layer), a layer L2 (that is, a data link layer), a user datagram protocol (user datagram protocol, UDP) layer, an internet protocol (internet protocol, IP) layer, a general packet radio service (general packet radio service, GPRS) tunneling protocol (GPRS tunneling protocol, GTP)-user plane (GTP-U) layer, and the like. In addition, the UPF network element may further include a PDU session layer that is equivalent to a PDU session layer of the terminal device. A protocol layer structure between the UPF network element and the application server may include a layer L1 and a layer L2, and further include another layer. For details, refer to an existing protocol. In addition, the application server may further include an application layer that is equivalent to an application layer of the terminal device.

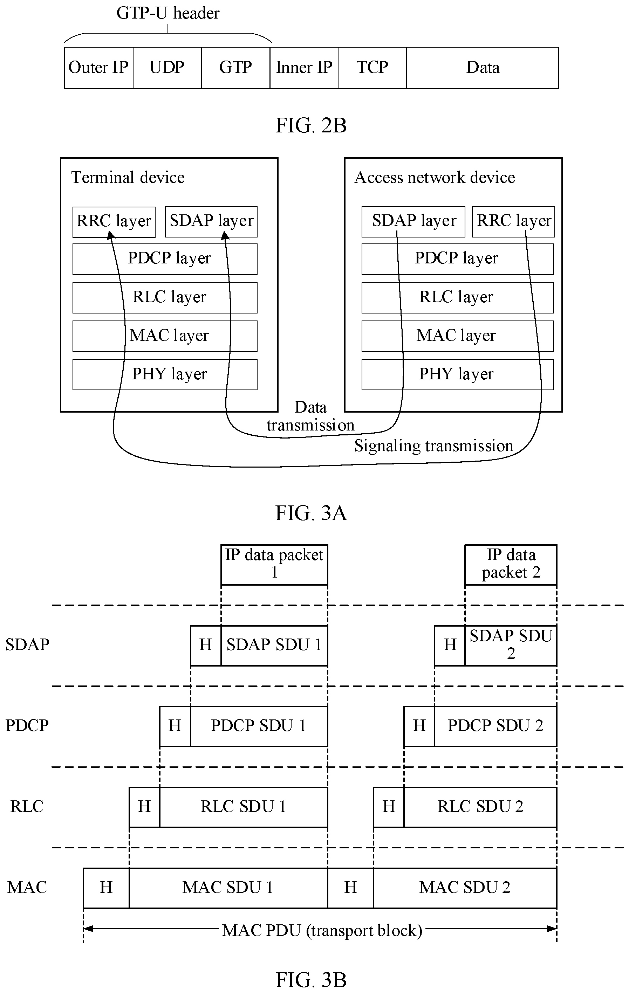

The access network device may receive a GTP-U data packet from the UPF network element through an NG interface (which may also be referred to as an N3 interface or an NG-U tunnel). For example, as shown in FIG. 2B, the GTP-U data packet includes a GTP-U header, an inner IP (inner IP) header, a TCP header, and data, and the GTP-U header includes an outer IP (outer IP) header, a UDP header, and a GTP header.

The following describes a protocol layer structure between the access network device and the terminal device.

An access network protocol layer structure between the access network device and the terminal device may include a control plane protocol layer structure and a user plane protocol layer structure. FIG. 2A is illustrated by using an example of the user plane protocol structure. For example, the control plane protocol layer structure may include a radio resource control (radio resource control, RRC) layer, a packet data convergence protocol (packet data convergence protocol, PDCP) layer, a radio link control (radio link control, RLC) layer, a media access control (media access control, MAC) layer, and a physical layer (physical layer, PHY). The user plane protocol layer structure may include a PDCP layer, an RLC layer, a MAC layer, and a physical layer. In a possible implementation, a service data adaptation protocol (service data adaptation protocol, SDAP) layer may be further included above the PDCP layer. The SDAP layer, the PDCP layer, the RLC layer, the MAC layer, and the physical layer may also be collectively referred to as an access stratum. It can be learned from FIG. 2A that the terminal device further includes a non-access stratum, for example, a PDU session layer or an application layer. For detailed descriptions of the foregoing protocol layers, refer to related technical specifications of a 3rd generation partnership project (3rd generation partnership project, 3GPP).

When the access network device and the terminal device perform user plane data transmission, data needs to pass through a user plane protocol layer, for example, through the SDAP layer, the PDCP layer, the RLC layer, the MAC layer, and the physical layer. For example, at least one data radio bearer (data radio bearer, DRB) is established between the access network device and the terminal device for data transmission. Each DRB may correspond to a functional entity set. For example, the functional entity set includes one PDCP layer entity, at least one RLC layer entity corresponding to the PDCP layer entity, at least one MAC layer entity corresponding to the at least one RLC layer entity, and at least one physical layer entity corresponding to the at least one MAC layer entity.

Downlink data transmission is used as an example. FIG. 3A shows transmission of downlink data between layers. As shown in FIG. 3A, from a perspective of the access network device, after obtaining the data, an SDAP layer entity of the access network device may map, based on a quality of service (quality of service, QoS) flow identifier (QoS flow identifier, QFI) of the data, the data to a PDCP layer entity of a corresponding DRB. The PDCP layer entity may transmit the data to at least one RLC layer entity corresponding to the PDCP layer entity, and then the at least one RLC layer entity transmits the data to a corresponding MAC layer entity. Then, the MAC layer entity generates a transport block, and a corresponding physical layer entity performs wireless transmission, to send the transport block to the terminal device.

The downlink data may be correspondingly encapsulated at each layer of the access network device. Data received by a layer from an upper layer of the layer is considered as a service data unit (service data unit, SDU) of the layer, is encapsulated into a PDU at the layer, and is then transmitted to a next layer. For example, as shown in FIG. 3B, data received by the PDCP layer entity from the SDAP layer may be referred to as a PDCP SDU. After encapsulating the PDCP SDU (for example, adding a PDCP layer header), the PDCP layer entity obtains a PDCP PDU and sends the PDCP PDU to an RLC layer. A PDCP PDU received by the RLC layer entity from the PDCP layer may be referred to as an RLC SDU. After encapsulating the RLC SDU (for example, adding an RLC layer header), the RLC layer entity obtains an RLC PDU and sends the RLC PDU to the MAC layer. After receiving the RLC PDU, the MAC layer may encapsulate one or more RLC PDUs (and RLC PDU segments) into one MAC PDU. The MAC PDU may also be referred to as a transport block, and send the transport block to the physical layer. After receiving the transport block, the physical layer may add check information, for example, cyclic redundancy check (cyclic redundancy check, CRC), to the transport block, and send the transport block to the terminal device. Data may be transmitted between different layers through a corresponding channel. For example, data may be transmitted between the RLC layer entity and the MAC layer entity through a logical channel (logical channel, LCH), and data may be transmitted between the MAC layer entity and the physical layer entity through a transport channel (transport channel).

When the access network device and the terminal device perform control plane signaling transmission, signaling needs to pass through a control plane protocol layer, for example, through an RRC layer, the PDCP layer, the RLC layer, the MAC layer, and the physical layer. For example, at least one signaling radio bearer (signaling radio bearer, SRB) is established between the access network device and the terminal device for signaling transmission. The SRB and the DRB may be collectively referred to as a radio bearer (radio bearer, RB).

An example in which the access network device sends RRC signaling to the terminal device is used. The RRC signaling may also be referred to as an RRC message. FIG. 3A is a diagram of transmission of an RRC message between layers. As shown in FIG. 3A, from a perspective of the access network device, after generating an RRC message, an RRC layer entity of the access network device may transfer the RRC message to a PDCP layer entity of a corresponding SRB. The PDCP layer entity may transmit the RRC message to at least one RLC layer entity corresponding to the PDCP layer entity, and then the at least one RLC layer entity transmits the RRC message to a corresponding MAC layer entity. Then, the MAC layer entity generates a transport block, and a corresponding physical layer entity performs wireless transmission, to send the transport block to the terminal device.

From a perspective of the terminal device, after a physical layer of the terminal device receives the transport block from the access network device, the transport block may be sequentially transferred from the physical layer to upper layers, and may be correspondingly decapsulated at each layer. In other words, processing performed at each layer of the terminal device may be an inverse process of processing performed at each layer of the access network device.

In data transmission between the terminal device and the access network device, because an error may occur in the data transmission process, transmitted data may be monitored in manners such as CRC check. An example of CRC check is used. A transmit end may multiplex data of one or more services into a same transport block, and send the data to a receive end by adding CRC check information. Generation of the CRC check information depends on content included in the entire transport block. A physical layer of the receive end may perform integrity check on the transport block based on the CRC check information. If the CRC check succeeds, it indicates that transmission of the transport block succeeds, the transport block is transferred to an upper layer, and an acknowledgment (acknowledgment, ACK) may be further sent to the transmit end; or if the CRC check fails, it indicates that an error occurs in the transmission of the transport block, the transport block is not transferred to the upper layer, and a negative acknowledgment (negative acknowledgment, NACK) may be further sent to the transmit end. After receiving the ACK, the transmit end may send a new transport block; or after sending the NACK, the transmit end may retransmit the transport block. In this manner, the receive end can transfer data to an upper layer only when an access stratum (for example, the physical layer) determines that the data is correctly transmitted.

However, in a semantic communication scenario, a service supported by semantic communication may include a high-precision voice service, a high-definition video service, and the like. These services have a large amount of data and have a high requirement on a data delay. If data of the foregoing services is incorrectly transmitted at a bottom layer, the data cannot be transferred to an upper layer, and can only be discarded or wait for retransmission. Because this type of service has a relatively high delay requirement, discarding data that is incorrectly transmitted or waiting for retransmission may cause poor user experience. For example, for a high-definition video service, video freeze may occur when a user watches a video. In addition, with evolution of a coding scheme, for example, in semantic communication, correct decoding may be performed at an application layer based on residual semantic information in an incorrect data packet. Therefore, discarding or retransmitting data at the bottom layer causes a waste of radio resources.

In addition, because a service in a semantic communication scenario has a specific semantic error tolerance capability, the foregoing CRC check manner for a transport block is not applicable. Specifically, in the CRC check manner, bits included in the entire transport block are checked. Once there is a bit that is incorrectly transmitted, the CRC check fails. To be specific, whether the transmission of the transport block succeeds or fails is determined based only on whether there is a bit that is incorrectly transmitted in the transport block. For a service having a semantic error tolerance capability, although a transport block corresponding to the service has a specific bit that is incorrectly transmitted, decoding at the application layer is not affected. In other words, even if there is a specific bit that is incorrectly transmitted, it may be considered that the transmission of the transport block succeeds. However, in the foregoing CRC check manner, the transport block is determined to have failed transmission, and is no longer transferred to an upper layer. Consequently, an error tolerance requirement of the error tolerance service cannot be met.

Based on this, embodiments of this application provide a communication method, to determine, at an access stratum, whether transmission of an error-tolerant bit succeeds or fails, so that a feedback delay or a retransmission delay is reduced while an error tolerance requirement is met, thereby improving user experience.

The communication method provided in embodiments of this application may involve interaction between two devices. The two devices are, for example, a first device and a second device. The second device may be a transmit end, and the first device is a receive end. For example, the second device is an access network device, and the first device is a terminal device; or the second device is a terminal device, and the first device is an access network device. In embodiments of this application, unless otherwise specified, the "terminal device" may refer to the terminal device itself, or may refer to a component in the terminal device, for example, a chip or a chip system. The "network device" may refer to the network device itself, or may refer to a component in the network device, for example, a chip or a chip system.

For ease of description, the following uses an example in which the method is performed by the access network device and the terminal device, that is, the second device is the access network device and the first device is the terminal device. After accessing a wireless network via the access network device, the terminal device may subscribe to one or more services. The one or more services may include a semantic error tolerance service, and optionally, further include a non-semantic error tolerance service. The semantic error tolerance service may also be referred to as an error tolerance service for short, and is a service that has an error tolerance capability in source or application layer decoding, that is, the source or application layer can perform correct content recovery based on incorrect data. A data bit of an error tolerance service (that is, a data bit generated by using semantically related source encoding, excluding a packet header added by a protocol layer (for example, the access stratum)) may be considered as an error-tolerant bit, and a packet header added by the protocol layer (for example, the access stratum) may be considered as a non-error-tolerant bit.

The following describes in detail embodiments of this application with reference to Embodiment 1 to Embodiment 5.

**Embodiment 1**

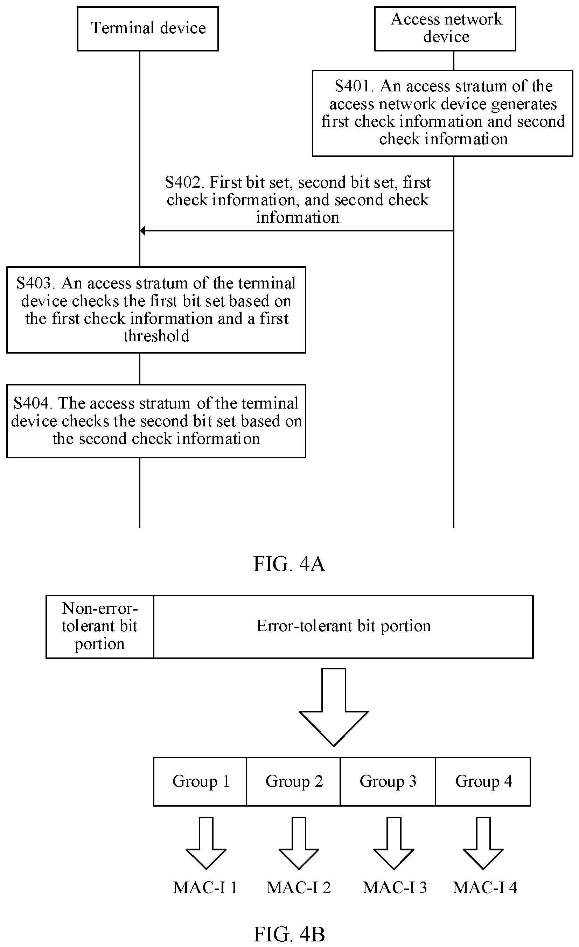

FIG. 4A is a schematic flowchart corresponding to a communication method according to an embodiment of this application. As shown in FIG. 4A, the method includes the following steps.

S401. An access stratum of an access network device generates first check information and second check information.

Herein, the first check information and a first threshold are used to perform integrity check on a first bit set, and the second check information is used to perform integrity check on a second bit set. The first bit set may include a plurality of error-tolerant bits (for example, data bits for an error tolerance service), and the first bit set may also be referred to as an error-tolerant bit set or an error-tolerant bit portion. The second bit set may include a plurality of non-error-tolerant bits (for example, bits in a protocol layer header or the like), and the second bit set may also be referred to as a non-error-tolerant bit set or a non-error-tolerant bit portion.

As described above, the access stratum of the access network device may include an SDAP layer, a PDCP layer, an RLC layer, a MAC layer, a physical layer, and the like. That the access stratum of the access network device generates the first check information and the second check information may mean that an access stratum a of the access network device generates the first check information, and an access stratum b of the access stratum device generates the second check information. In embodiments of this application, which one of the SDAP layer, the PDCP layer, the RLC layer, the MAC layer, and the physical layer is specifically the access stratum a or the access stratum b is not limited. The access stratum a and the access stratum b may be different access strata. For example, the access stratum a is a PDCP layer, an RLC layer, or a MAC layer, and the access stratum b is a physical layer. For another example, the access stratum a is a PDCP layer or an RLC layer, and the access stratum b is a MAC layer or a physical layer. Alternatively, the access stratum a and the access stratum b may be a same access stratum. For example, both the access stratum a and the access stratum b are a MAC layer. For another example, both the access stratum a and the access stratum b are a physical layer.

For example, the MAC layer of the access network device generates the first check information and the physical layer generates the second check information. The MAC layer of the access network device receives one or more RLC PDUs (for example, an RLC PDU-1 and an RLC PDU-2) from the RLC layer of the access network device. If the MAC layer of the access network device determines to encapsulate the RLC PDU-1 and the RLC PDU-2 into one transport block, which bits in the RLC PDU-1 and the RLC PDU-2 are error-tolerant bits may be determined, that is, the first bit set is determined. In this way, the MAC layer of the access network device may generate the first check information for the first bit set, and then transfer the transport block to the physical layer. The transport block includes the first bit set, the second bit set, and the first check information.

In an example, as shown in FIG. 4B, the first bit set may include a plurality of groups, and the first check information may include check information respectively corresponding to the plurality of groups. For example, the MAC layer of the access network device may divide bits in the first bit set into a plurality of groups based on a quantity of groups, and generate, for each of the plurality of groups by using a first integrity protection algorithm, check information corresponding to the group, for example, CRC check information or MAC-I (MAC-I is used as an example in FIG. 4B). The quantity of groups may be preconfigured, or predefined in a protocol. The first integrity protection algorithm may be preconfigured, or predefined in a protocol. In this implementation, the first check information may be located in a MAC layer header of the transport block.

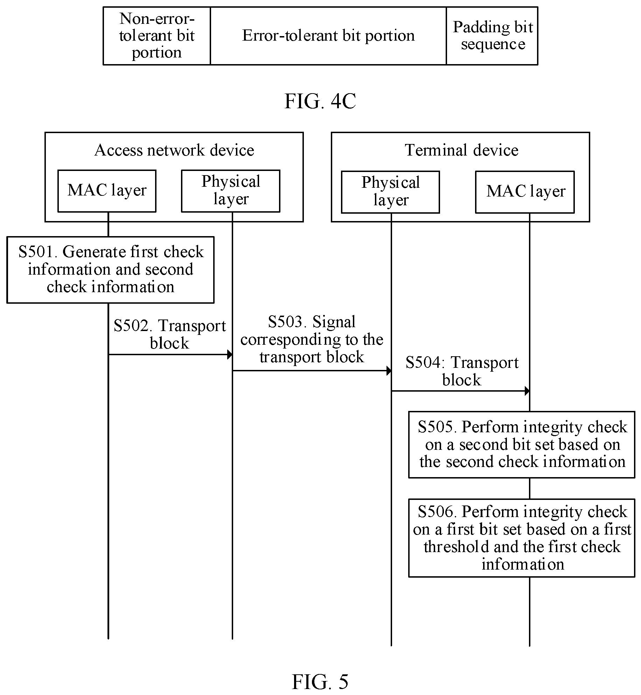

In still another example, as shown in FIG. 4C, the first check information may be a padding bit sequence, and the padding bit sequence may be a preset bit sequence, for example, an all-0 sequence or an all-1 sequence. This is not specifically limited. In this implementation, the first check sequence may be located at a tail of the transport block, or may be adjacent to the bits in the first bit set.

Correspondingly, after receiving the transport block, the physical layer may determine which bits in the transport block are non-error-tolerant bits (bits in the transport block other than the error-tolerant bits are non-error-tolerant bits), that is, determine the second bit set. Further, the physical layer of the access network device may generate the second check information, for example, CRC check information or MAC-I, for the second bit set by using a second integrity protection algorithm. The second integrity protection algorithm may be preconfigured or predefined in a protocol. The second integrity protection algorithm and the first integrity protection algorithm may be the same or different.

It may be understood that the foregoing uses an example in which the MAC layer of the access network device generates the first check information and the physical layer generates the second check information. A specific implementation in which the first check information and the second check information is generated by another layer may be implemented by analogy. Details are not described again.

The following describes a specific implementation of determining the error-tolerant bit by the access network device.

As described above, after generating data of an error tolerance service, an application layer of an application server may transmit the data to the access network device through the path shown in FIG. 2A. A first data packet received by the access network device may include indication information. For example, the indication information is carried in a header of the first data packet. The indication information indicates a location of an error-tolerant bit in the first data packet, and a bit in the first data packet other than the error-tolerant bit is a non-error-tolerant bit. The first bit set may include a part or all of the error-tolerant bit in the first data packet.

In a possible implementation, the first data packet is a GTP-U data packet, and the indication information indicates a location of an error-tolerant bit in the GTP-U data packet (and/or a location of a non-error-tolerant bit in the GTP-U data packet). For example, the indication information is located in a GTP-U header. For example, an indication field may be added to the GTP-U header by using an extension bit, to carry the indication information.

Error-tolerant bits in the GTP-U data packet may be distributed discretely, or may be distributed continuously. The indication information may include an index value of the location of the error-tolerant bit in the GTP-U data packet. A correspondence between the location of the error-tolerant bit in the GTP-U data packet and the index value may be preconfigured, or may be predefined in a protocol.

For example, when the index value is 1, the first 1/3 of the GTP-U data packet is a non-error-tolerant bit portion, and the last 2/3 is an error-tolerant bit portion; or when the index value is 2, the first 1/5 of the GTP-U data packet is a non-error-tolerant bit portion, and the last 4/5 is an error-tolerant bit portion. It may be understood that the proportion-based indication (for example, 1/3 or 2/3) herein may also be expressed as an indication based on an absolute quantity of bits. For example, when the index value is 1, the first 100 bits in the GTP-U data packet are non-error-tolerant bits, and the subsequent bits are error-tolerant bits; or when the index value is 2, the first 200 bits in the GTP-U data packet are non-error-tolerant bits, and the subsequent bits are error-tolerant bits.

For another example, a correspondence between the location of the error-tolerant bit in the GTP-U data packet and the index value is shown in Table 1. In Table 1, when the index value is 0, the access network device may consider that all bits in the GTP-U data packet are error-tolerant bits. When the index value is 1, the access network device may consider that the first 10 bits in the GTP-U data packet are non-error-tolerant bits, and the other bits are all error-tolerant bits. Other index values may be understood by analogy. From a perspective of a UPF network element, if the UPF network element determines that the non-error-tolerant bits in the GTP-U data packet are the first 15 bits or the first 20 bits, the UPF network element may use the GTP-U data packet to carry an index value 3.

Table 1: Example of index values

| Index value | Length | Index value | Length | Index value | Length | Index value | Length |
|---|---|---|---|---|---|---|---|
| 0 | 0 | 8 | ≤ 102 | 16 | ≤ 1446 | 24 | ≤ 20516 |
| 1 | ≤ 10 | 9 | ≤ 142 | 17 | ≤ 2014 | 25 | ≤ 28581 |
| 2 | ≤ 14 | 10 | ≤ 198 | 18 | ≤ 2806 | 26 | ≤ 39818 |
| 3 | ≤ 20 | 11 | ≤ 276 | 19 | ≤ 3909 | 27 | ≤ 55474 |
| 4 | ≤ 28 | 12 | ≤ 384 | 20 | ≤ 5446 | 28 | ≤ 77284 |
| 5 | ≤ 38 | 13 | ≤ 535 | 21 | ≤ 7587 | 29 | ≤ 107669 |

(continued)

| Index value | Length | Index value | Length | Index value | Length | Index value | Length |
|---|---|---|---|---|---|---|---|
| 6 | $\leq 53$ | 14 | $\leq 745$ | 22 | $\leq 10570$ | 30 | $\leq 150000$ |
| 7 | $\leq 74$ | 15 | $\leq 1038$ | 23 | $\leq 14726$ | 31 | $> 150000$ |

It may be understood that the correspondence in Table 1 is merely an example, and may be adjusted according to an actual requirement in specific implementation.

In still another possible implementation, the first data packet may be an IP data packet (including an inner IP header, a TCP header, and data), and the indication information may be carried in the inner IP header. The indication information indicates a location of an error-tolerant bit in the IP data packet. For specific implementation, refer to the foregoing descriptions of "the first data packet is the GTP-U data packet".

S402. The access stratum of the access network device sends the first bit set, the second bit set, the first check information, and the second check information to a terminal device. Correspondingly, an access stratum of the terminal device receives the first bit set, the second bit set, the first check information, and the second check information.

Herein, there are a plurality of specific implementations in which the access stratum of the access network device sends the first bit set, the second bit set, the first check information, and the second check information to the terminal device.

For example, if the SDAP layer, the PDCP layer, the RLC layer, or the MAC layer of the access network device generates the first check information, and the MAC layer of the access network device generates the second check information, the MAC layer of the access network device may encapsulate the first bit set, the first check information, the second bit set, and the second check information into one transport block, and the access stratum of the access network device may send the transport block to the terminal device. The transport block includes the first bit set, the second bit set, the first check information, and the second check information.

For another example, if the SDAP layer, the PDCP layer, the RLC layer, or the MAC layer of the access network device generates the first check information, the MAC layer of the access network device may encapsulate the first bit set, the first check information, and the second bit set into one transport block, and send the transport block to the physical layer of the access network device. The physical layer of the access network device may generate the second check information for the second bit set, so that the access stratum of the access network device may send the transport block and the second check information to the terminal device. The transport block includes the first bit set, the second bit set, and the first check information.

For another example, the MAC layer of the access network device sends a transport block to the physical layer of the access network device, where the transport block includes the first bit set and the second bit set. If the physical layer of the access network device generates the first check information for the first bit set, and generates the second check information for the second bit set, the access stratum of the access network device may send the transport block, the first check information, and the second check information to the terminal device.

S403. The access stratum of the terminal device checks the first bit set based on the first check information and a first threshold.

Herein, there are a plurality of manners for the access stratum of the terminal device to check the first bit set. The following describes two possible implementations: Implementation 1A and Implementation 2A.

(1) Implementation 1A

The access stratum of the terminal device may perform integrity check on the first bit set based on the first check information, to obtain a check value of the first bit set, and further determine a check result of the first bit set based on the check value of the first bit set and the first threshold. If the check value of the first bit set does not reach the first threshold, the check result of the first bit set is that the integrity check on the first bit set succeeds; or if the check value of the first bit set reaches the first threshold, the check result of the first bit set is that the integrity check on the first bit set fails.

The first threshold is a quantitative indicator (for example, a semantic error tolerance percentage) of an error tolerance capability. For example, a higher error tolerance capability indicates a larger first threshold. The check value of the first bit set represents a degree to which the first bit set is incorrectly transmitted. For example, a smaller check value of the first bit set indicates a lower degree to which the first bit set is incorrectly transmitted (that is, a smaller proportion of bits that are incorrectly transmitted in the first bit set). In this case, that the check value of the first bit set does not reach the first threshold may mean that the check value of the first bit set is less than or equal to the first threshold. In addition, that the check value of the first bit set reaches the first threshold may mean that the check value of the first bit set is greater than the first threshold. Alternatively, in another example, the check value of the first bit set represents a degree to which the first bit set is correctly transmitted. For example, a larger check value of the first bit set indicates a higher degree to which the first bit set is correctly transmitted (that is, a greater proportion of bits that are correctly transmitted in the first bit set).

For example, the first bit set includes a plurality of groups, and the first check information includes check information respectively corresponding to the plurality of groups. A first group in the plurality of groups is used as an example. The access stratum of the terminal device may perform integrity check on the first group based on the check information corresponding to the first group, to obtain a check value of the first group. The access stratum of the terminal device may obtain the check value of the first bit set based on the check value of the first group (for example, the access stratum of the terminal device may separately determine check values of the plurality of groups, and then obtain the check value of the first bit set based on the check values of the plurality of groups).

For example, the first bit set includes 10 groups (which are respectively a group 1 to a group 10), and check information corresponding to the 10 groups is MAC-I (1), MAC-I (2), ..., and MAC-I (10) respectively. The access stratum of the terminal device may generate XMAC-I (1) based on the group 1 by using the first integrity protection algorithm. If XMAC-I (1) is the same as MAC-I (1), a check value of the group 1 is 0, and in this case, a check result of the group 1 is that integrity check on the group 1 succeeds. If XMAC-I (1) is different from MAC-I (1), a check value of the group 1 is 1, and in this case, a check result of the group 1 is that integrity check on the group 1 fails. By analogy, the access stratum of the terminal device may determine check values of the 10 groups, and then use a ratio of a sum of the check values of the 10 groups to 10 as the check value of the first bit set. In other words, the check value of the first bit set is $\sum_{i=1}^{N} ai / N$, $ai$ represents a check value of an $i^{th}$ group, and $N$ represents a quantity of groups. For example, when the first threshold is 0.2, if the check value of the first bit set is less than or equal to 0.2, the integrity check on the first bit set succeeds; or if the check value of the first bit set is greater than 0.2, the integrity check on the first bit set fails.

It may be understood that the foregoing is described by using an example in which "the access stratum of the terminal device determines the check values of the 10 groups". In another embodiment, if the access stratum of the terminal device determines check values of some of the 10 groups, the check result of the first bit set may be determined, and check values of the remaining groups may not need to be determined, thereby alleviating processing burden. For example, if the first threshold is 0.2, the access stratum of the terminal device determines check values of three groups, and the check values of the three groups are all 1, it may be directly determined that the integrity check on the first bit set fails, and check values of the remaining seven groups do not need to be determined.

(2) Implementation 2A

The first check information may be the padding bit sequence. In this case, the access stratum of the terminal device may perform integrity check on the padding bit sequence, to obtain a check value of the padding bit sequence. Further, a check result of the first bit set is determined based on the check value of the padding bit sequence and the first threshold. If the check value of the padding bit sequence does not reach the first threshold, the check result of the first bit set is that the integrity check on the first bit set succeeds; or if the check value of the padding bit sequence reaches the first threshold, the check result of the first bit set is that the integrity check on the first bit set fails.

The first threshold is a quantitative indicator (for example, a semantic error tolerance distance) of an error tolerance capability. For example, a higher error tolerance capability indicates a larger first threshold. The check value of the padding bit sequence represents a degree to which the padding bit sequence is incorrectly transmitted. For example, a smaller check value of the padding bit sequence indicates a lower degree to which the padding bit sequence is incorrectly transmitted (that is, a smaller proportion of bits that are incorrectly transmitted in the padding bit sequence). In this case, that the check value of the padding bit sequence does not reach the first threshold may mean that the check value of the padding bit sequence is less than or equal to the first threshold. In addition, that the check value of the padding bit sequence reaches the first threshold may mean that the check value of the padding bit sequence is greater than the first threshold.

For example, the padding bit sequence generated by the access stratum of the access network device is a preset bit sequence (for example, a sequence of 20 bits of all 0s). The access stratum of the terminal device may calculate a distance (for example, a Euclidean distance or a Hamming distance) between the received padding bit sequence and the preset bit sequence, and the distance is the check value of the padding bit sequence. Alternatively, the access stratum of the terminal device may directly add values of all bits in the padding bit sequence to obtain the check value of the padding bit sequence. For example, the preset bit sequence is a sequence of 20 bits of all 0s. If all bits in the padding bit sequence are correctly transmitted, a sum of values of all the bits in the padding bit sequence is 0. If a specific bit is incorrectly transmitted, a value of the bit that is incorrectly transmitted changes from 0 to 1. Therefore, the check value of the padding bit sequence can be obtained based on a sum of values of all the bits in the padding bit sequence (or a total quantity of bits whose values are 1 in the 20 bits). For example, the total quantity of bits whose values are 1 in the 20 bits is 3, and the first threshold is 2. In this case, if the check value of the padding bit sequence reaches the first threshold (that is, the check value of the padding bit sequence is greater than the first threshold), it may be determined that the integrity check on the first bit set fails. For another example, the total quantity of bits whose values are 1 in the 20 bits is 3, and the first threshold is 4. In this case, if the check value of the padding bit sequence does not reach the first threshold (that is, the check value of the padding bit sequence is less than or equal to the first threshold), it may be determined that the integrity check on the first bit set succeeds.

In addition, as described above, the first threshold is a quantitative indicator of an error tolerance capability. For example, in Case 1, the bits in the first bit set belong to a same error tolerance service. In this case, the first threshold may be a threshold corresponding to the error tolerance service, and the threshold corresponding to the error tolerance service is a quantitative indicator of an error tolerance capability of the error tolerance service. For another example, in Case 2, the bits in the first bit set belong to a plurality of error tolerance services. In this case, the first threshold may be determined based on thresholds corresponding to the plurality of error tolerance services (for example, the first threshold is a smallest value or an average value of the thresholds corresponding to the plurality of error tolerance services).

It should be noted that Case 1 is used as an example (Case 2 may be processed with reference to Case 1). In another example, for Implementation 2A, the first threshold may also be determined based on a threshold corresponding to the error tolerance service. For example, the first threshold is less than the threshold corresponding to the error tolerance service. A reason is as follows: In Implementation 2A, whether the integrity check on the first bit set succeeds is determined based on the check value of the padding bit sequence. When a total quantity of bits that are incorrectly transmitted in the padding bit sequence is less than a total quantity of first bit sets, if it is determined, based on the threshold corresponding to the error tolerance service, that the integrity check on the first bit set succeeds, a total quantity of bits that are actually incorrectly transmitted in data transferred to an upper layer is great and exceeds an error tolerance capability of source decoding.

In embodiments of this application, the first threshold may be preconfigured, and the access stratum of the terminal device obtains the first threshold in a plurality of specific manners. The following describes three possible implementations: Implementation 1B, Implementation 2B, and Implementation 3B.

(1) Implementation 1B

The access stratum of the terminal device may obtain the first threshold (applicable to Case 1) or a plurality of thresholds (applicable to Case 2) from a non-access stratum of the terminal device, where the plurality of thresholds include the thresholds corresponding to the plurality of error tolerance services.

For example, the application server may send the first threshold or the plurality of thresholds to the terminal device via an application layer message. Correspondingly, an application layer of the terminal device may obtain the first threshold or the plurality of thresholds, and the access stratum of the terminal device may further obtain the first threshold or the plurality of thresholds from the application layer of the terminal device.

For another example, a core network device (for example, an AMF network element or an SMF network element) may send the first threshold or the plurality of thresholds to the terminal device via a non-access stratum message. Correspondingly, the non-access stratum of the terminal device may obtain the first threshold or the plurality of thresholds, and the access stratum of the terminal device may further obtain the first threshold or the plurality of thresholds from the non-access stratum of the terminal device.

(2) Implementation 2B

The access stratum of the access network device may send the first threshold (applicable to Case 1) or a plurality of thresholds (applicable to Case 2) to the access stratum of the terminal device.

For example, an RRC layer of the access network device may send the first threshold (applicable to Case 1) or the plurality of thresholds (applicable to Case 2) to the access stratum of the terminal device via an RRC message. The RRC message may be an RRC reconfiguration message or another possible message.

In Implementation 1B or 2B, the access stratum of the terminal device may determine the first threshold based on an error tolerance service to which the bit in the first bit set belong. For example, if the first bit set includes bits of an error tolerance service 1 and an error tolerance service 2, the access stratum of the terminal device may determine the first threshold based on a threshold corresponding to the error tolerance service 1 and a threshold corresponding to the error tolerance service 2.

(3) Implementation 3B

The access stratum of the access network device may send the first threshold to the access stratum of the terminal device (applicable to Case 2).

For example, for Case 2, the access stratum of the access network device may determine the first threshold based on thresholds corresponding to a plurality of error tolerance services currently performed by the terminal device, and send the first threshold to the access stratum of the terminal device. In other words, the first threshold is configured by the access network device for the terminal device, to alleviate processing burden of the terminal device.

For example, the plurality of error tolerance services currently performed by the terminal device include an error tolerance service 1, an error tolerance service 2, and an error tolerance service 3. The access stratum of the access network device may determine the first threshold based on thresholds respectively corresponding to the error tolerance service 1, the error tolerance service 2, and the error tolerance service 3, and send the first threshold to the access stratum of the terminal device. The access network device of the terminal device may directly check the first bit set based on the first check information and the first threshold, and does not need to pay attention to an error tolerance service to which the bit in the first bit set belongs (which is different from Implementation 1B or Implementation 2B). For example, even if error tolerance services to which the bits in the first bit set belong include the error tolerance service 1 and the error tolerance service 2, but do not include the error tolerance service 3, the terminal device may check the first bit set based on the first check information and the first threshold.

S404. The access stratum of the terminal device checks the second bit set based on the second check information.

The access stratum of the terminal device may perform integrity check on the second bit set based on the second check information, to obtain a check value of the second bit set, and further determine a check result of the second bit set based on the check value of the second bit set.

For example, the second check information may be CRC check information. When the second bit set is checked in a CRC check manner, there are two check values of the second bit set: a first check value (for example, 0) and a second check value (for example, 1). If the check value of the second bit set is the first check value, the check result of the second bit set is that the integrity check on the second bit set succeeds; or if the check value of the second bit set is the second check value, the check result of the second bit set is that the integrity check on the second bit set fails.

It may be understood that, if the first check information is generated by the access stratum a of the access network device in S401, an access stratum a of the terminal device may check the first bit set in S403; or if the second check information is generated by the access stratum b of the access network device in S401, an access stratum b of the terminal device may check the second bit set in S404. Generally, data of a same error tolerance service may be transmitted via a same RB, and data of different error tolerance services may be transmitted via different RBs. Therefore, when the access stratum a is an RLC layer or a layer above the RLC layer (for example, a PDCP layer), the bits in the first bit set belong to a same error tolerance service, so that an error-tolerant bit set transmitted on a different RB (per RB) can be separately checked, for example, an error-tolerant bit set (corresponding to the error tolerance service 1) on an RB 1 and an error-tolerant bit set (corresponding to the error tolerance service 2) on an RB 2 are separately determined, to enable error tolerance determining of each error tolerance service (it is assumed that data packets of a plurality of error tolerance services are multiplexed to a same transport block). In this way, the terminal device can implement selective transferring and discarding in the received transport block based on an error tolerance capability of each error tolerance service (for example, if integrity check on the error-tolerant bit set on the RB 1 succeeds, the error-tolerant bit set may be transferred to an upper layer, and if integrity check on the error-tolerant bit set on the RB 2 fails, the error-tolerant bit set may be discarded), thereby improving resource utilization. When the access stratum a is a MAC layer or a physical layer, the first bit set may include error-tolerant bits in a plurality of RLC PDUs. The plurality of RLC PDUs may belong to a same RB (in this case, the bits in the first bit set belong to a same error tolerance service), or may belong to different RBs (in this case, the bits in the first bit set belong to different error tolerance services). In this case, an error-tolerant bit set transmitted on per RB cannot be separately checked. However, a retransmission delay is shorter because determining is performed at a lower layer.

Optionally, the terminal device may send feedback information to the access network device based on the check result of the first bit set and the check result of the second bit set. For example, if the integrity check on the first bit set succeeds and the integrity check on the second bit set succeeds, the access stratum of the terminal device may send first feedback information to the access network device. The first feedback information indicates that transmission of a PDU succeeds, and the PDU includes the first bit set. For example, the PDU is an RLC PDU or a transport block. Correspondingly, after receiving the first feedback information, the access network device may transmit a new PDU. Alternatively, if the integrity check on the first bit set fails or the integrity check on the second bit set fails, second feedback information is sent to the access network device. The second feedback information indicates that the transmission of the PDU fails. Correspondingly, after receiving the second feedback information, the access network device may retransmit the PDU.

The following describes two examples with reference to Example 1 and Example 2.

(1) Example 1

For example, the MAC layer of the access network device generates the first check information, and the MAC layer or the physical layer generates the second check information. In this case, it is assumed that both the first bit set and the second bit set are located in a transport block 1. After a MAC layer or a physical layer of the terminal device checks the second bit set, if the integrity check on the second bit set fails, the physical layer of the terminal device may send feedback information 1 to the access network device, where the feedback information 1 indicates that transmission of the transport block 1 fails; or if the integrity check on the second bit set succeeds, the MAC layer of the terminal device may check the first bit set. Further, if the integrity check on the first bit set fails, the physical layer of the terminal device may send the feedback information 1 to the access network device, where the feedback information 1 indicates that the transmission of the transport block 1 fails. If the integrity check on the first bit set succeeds, the physical layer of the terminal device may send feedback information 2 to the access network device, where the feedback information 2 indicates that the transmission of the transport block 1 succeeds.

(2) Example 2

For example, the RLC layer of the access network device generates the first check information, and the MAC layer or the physical layer generates the second check information. In this case, it is assumed that both the first bit set and the second bit set are located in a transport block 2. After a MAC layer or a physical layer of the terminal device checks the second bit set, if the integrity check on the second bit set fails, the physical layer of the terminal device may send feedback information 1 to the access network device, where the feedback information 1 indicates that transmission of the transport block 2 fails; or if the integrity check on the second bit set succeeds, the second bit set may be transferred to an upper layer, so that an RLC layer of the terminal device may check the first bit set. Further, if the integrity check on the first bit set succeeds, the RLC layer of the terminal device may send feedback information 3 to the access network device, where the feedback information 3 indicates that transmission of the RLC PDU corresponding to the first bit set succeeds; or if the integrity check on the first bit set fails, the RLC layer of the terminal device may send feedback information 4 to the access network device, where the feedback information 4 indicates that the transmission of the RLC PDU corresponding to the first bit set fails.

Optionally, the RLC layer of the terminal device may transfer the check result of the first bit set to the physical layer (the RLC layer is used as an example above, and if the first bit set is checked at the PDCP layer or the MAC layer, the PDCP layer or the MAC layer may also transfer the check result of the first bit set to the physical layer). If the integrity check on the first bit set fails, the physical layer of the terminal device may also send the feedback information 1 to the access network device, where the feedback information 1 indicates that the transmission of the transport block 2 fails; or if the integrity check on the first bit set succeeds (and when the transport block 2 further includes another RLC PDU, and transmission of the another RLC PDU succeeds), the physical layer of the terminal device may send feedback information 2 to the access network device, where the feedback information 2 indicates that the transmission of the transport block 2 succeeds.

In the foregoing method, the access stratum of the access network device may separately generate respective check information for the first bit set (the error-tolerant bit set) and the second bit set (the non-error-tolerant bit set). In this way, the access stratum of the terminal device may separately check the first bit set and the second bit set. In comparison with a manner in which an application layer of a receive end feeds back information to a transmit end based on a decoding result and the transmit end determines whether to perform retransmission based on the feedback information, this manner reduces a feedback delay or a retransmission delay while meeting an error tolerance requirement, thereby improving user experience.

Based on the solutions in Embodiment 1, the following describes two possible implementation procedures with reference to Embodiment 2 and Embodiment 3.

**Embodiment 2**

In this embodiment, an example in which a MAC layer of an access stratum device generates first check information and second check information is used for description.

FIG. 5 is a schematic flowchart corresponding to a communication method according to an embodiment of this application. As shown in FIG. 5, the method includes the following steps.

S501. A MAC layer of an access stratum device generates first check information and second check information.

For example, the MAC layer of the access network device receives one or more RLC PDUs (for example, an RLC PDU-1 and an RLC PDU-2) from an RLC layer of the access network device. If the MAC layer of the access network device determines to encapsulate the RLC PDU-1 and the RLC PDU-2 into one transport block, which bits in the RLC PDU-1 and the RLC PDU-2 are error-tolerant bits and which bits are non-error-tolerant bits may be determined, that is, a first bit set and a second bit set are determined. In this way, the MAC layer of the access network device may generate the first check information for the first bit set, and generate the second check information for the second bit set.

For example, the first check information includes check information (for example, CRC check information or MAC-I) respectively corresponding to a plurality of groups in the first bit set, or the first check information includes a padding bit sequence; and the second check information includes CRC check information or MAC-I corresponding to the second bit set.

S502. The MAC layer of the access network device encapsulates the first bit set, the second bit set, the first check information, and the second check information into a transport block, and transfers the transport block to a physical layer of the access network device.

S503. After receiving the transport block, the physical layer of the access network device may perform first processing on the transport block to obtain a signal corresponding to the transport block, and send the signal corresponding to the transport block to a physical layer of a terminal device.

For example, the first processing may include channel encoding, rate matching, and the like. Because the MAC layer of the access network device has generated the first check information for the first bit set, and generated the second check information for the second bit set, the physical layer may not need to add the CRC check information. In other words, the first processing may not include adding the CRC check information to the transport block.

S504. After receiving the signal corresponding to the transport block, the physical layer of the terminal device may perform second processing on the signal corresponding to the transport block to obtain the transport block, to transfer the transport block to a MAC layer of the terminal device.

The second processing is an inverse process of the first processing. For example, the second processing includes channel decoding, rate de-matching, and the like.

S505. The MAC layer of the terminal device performs integrity check on the second bit set based on the second check information in the transport block.

If the integrity check on the second bit set succeeds, S506 is performed. If the integrity check on the second bit set fails, the physical layer of the terminal device sends feedback information 2 to the physical layer of the access network device, where the feedback information 2 indicates that transmission of the transport block fails.

S506. The MAC layer of the terminal device performs integrity check on the first bit set based on a first threshold and the first check information in the transport block.

For example, if the RLC PDU-1 and the RLC PDU-2 correspond to a same RB or a same error tolerance service, that is, bits in the first bit set belong to a same error tolerance service (for example, an error tolerance service 1), the MAC layer of the terminal device may use a threshold corresponding to the error tolerance service 1 as the first threshold. If the RLC PDU-1 and the RLC PDU-2 correspond to different RBs, for example, the RLC PDU-1 corresponds to an RB 1, and the RLC PDU-2 corresponds to an RB 2, that is, bits in the first bit set belong to two error tolerance services (for example, an error tolerance service 1 and an error tolerance service 2), the MAC layer of the terminal device may obtain the first threshold based on a threshold corresponding to the error tolerance service 1 and a threshold corresponding to the error tolerance service 2. For example, a smaller value of the threshold corresponding to the error tolerance service 1 and the threshold corresponding to the error tolerance service 2 is used as the first threshold. For a specific implementation of "the MAC layer of the terminal device performs integrity check on the first bit set", refer to Implementation 1A and Implementation 2A in Embodiment 1.

If the integrity check on the first bit set succeeds, the physical layer of the terminal device sends feedback information 1 to the physical layer of the access network device, where the feedback information 1 indicates that the transmission of the transport block succeeds. If the integrity check on the first bit set fails, the physical layer of the terminal device sends the feedback information 2 to the physical layer of the access network device.

It may be understood that the foregoing is described by using an example in which "the MAC layer of the terminal device first performs integrity check on the second bit set, and then performs integrity check on the first bit set". In another possible example, the MAC layer of the terminal device may first perform integrity check on the first bit set, and then perform integrity check on the second bit set; or the MAC layer of the terminal device may perform integrity check on the first bit set and the integrity of the second bit set at the same time.


**Embodiment 3**

In this embodiment, an example in which an RLC layer of an access stratum device generates first check information and a MAC layer generates second check information is used for description.

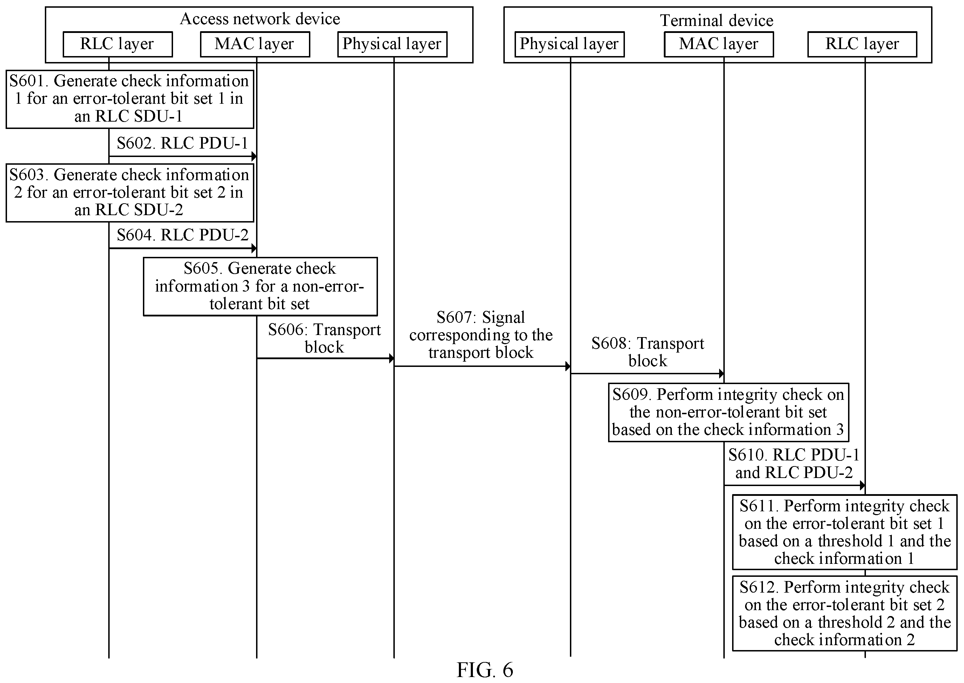

FIG. 6 is a schematic flowchart corresponding to a communication method according to an embodiment of this application. As shown in FIG. 6, the method includes the following steps.

S601. An RLC layer of an access stratum device generates check information 1 for an error-tolerant bit set 1 in an RLC SDU-1.

For example, the RLC layer of the access stratum device divides error-tolerant bits in the RLC SDU-1 into 10 groups (a group a1 to a group al0), and generates check information respectively corresponding to the group a1 to the group a10. For example, the check information corresponding to the group a1 to the group a10 is MAC-I (a1), MAC-I (a2), ..., and MAC-I (a10) respectively. To be specific, the error-tolerant bit set 1 includes 10 groups, and the check information 1 includes the check information respectively corresponding to the group a1 to the group a10.

S602. The RLC layer of the access stratum device encapsulates the RLC SDU-1 and the check information 1 into an RLC PDU-1, and sends the RLC PDU-1 to a MAC layer of the access network device.

For example, the check information 1 may be located in an RLC layer header of the RLC PDU-1.

S603. The RLC layer of the access stratum device generates check information 2 for an error-tolerant bit set 2 in an RLC SDU-2.

For example, the RLC layer of the access stratum device divides error-tolerant bits in the RLC SDU-2 into 10 groups (a group b1 to a group b10), and generates check information respectively corresponding to the group b1 to the group b10. For example, the check information corresponding to the group b1 to the group b10 is MAC-I (b1), MAC-I (b2), ..., and MAC-I (b10) respectively. To be specific, the error-tolerant bit set 2 includes 10 groups, and the check information 2 includes the check information respectively corresponding to the group b1 to the group b10.

S604. The RLC layer of the access stratum device encapsulates the RLC SDU-2 and the check information 2 into an RLC PDU-2, and sends the RLC PDU-2 to the MAC layer of the access network device.

For example, the check information 2 may be located in an RLC layer header of the RLC PDU-2.

S605. The MAC layer of the access network device determines to encapsulate the RLC PDU-1 and the RLC PDU-2 into one transport block, and may determine which bits in the RLC PDU-1 and the RLC PDU-2 are non-error-tolerant bits, that is, determine a non-error-tolerant bit set, where the non-error-tolerant bit set includes a non-error-tolerant bit in the RLC PDU-1 and a non-error-tolerant bit in the RLC PDU-2; and the MAC layer of the access network device may further generate check information 3 for the non-error-tolerant bit set.

For example, the check information 3 is CRC check information.

S606. The MAC layer of the access network device performs encapsulation to obtain the transport block, and transfers the transport block to a physical layer of the access network device.

For example, the check information 3 may be located in a MAC layer header of the transport block.

The transport block includes the error-tolerant bit set 1, the check information 1, the error-tolerant bit set 2, the check information 2, the non-error-tolerant bit set, and the check information 3.

S607. After receiving the transport block, the physical layer of the access network device may perform first processing on the transport block to obtain a signal corresponding to the transport block, and send the signal corresponding to the transport block to a physical layer of a terminal device.

S608. After receiving the signal corresponding to the transport block, the physical layer of the terminal device may perform second processing on the signal corresponding to the transport block to obtain the transport block, to transfer the transport block to a MAC layer of the terminal device.

For S607 and S608, refer to the descriptions of S503 and S504.

S609. The MAC layer of the terminal device performs integrity check on the non-error-tolerant bit set in the transport block based on the check information 3 in the transport block.

If the integrity check on the non-error-tolerant bit set succeeds, S610 is performed. If the integrity check on the non-error-tolerant bit set fails, the physical layer of the terminal device may send feedback information 2 to the physical layer of the access network device, where the feedback information 2 indicates that transmission of the transport block fails. In this case, the MAC of the terminal device does not need to transfer the RLC PDU-1 and the RLC PDU-2 in the transport block to an upper layer.

S610. The MAC layer of the terminal device transfers the RLC PDU-1 and the RLC PDU-2 in the transport block to an RLC layer of the terminal device. Correspondingly, the RLC layer of the terminal device receives the RLC PDU-1 and the RLC PDU-2.

S611. The RLC layer of the terminal device performs integrity check on the error-tolerant bit set 1 based on a threshold 1 and the check information 1 in the RLC PDU-1.

If the integrity check on the error-tolerant bit set 1 succeeds, the RLC layer of the terminal device sends feedback information 3a to the access network device, where the feedback information 3a indicates that transmission of the RLC PDU-1 succeeds. If the integrity check on the error-tolerant bit set 1 fails, the RLC layer of the terminal device sends feedback information 4a to the access network device, where the feedback information 4a indicates that the transmission of the RLC PDU-1 fails. If bits in the error-tolerant bit set 1 belong to an error tolerance service 1, the threshold 1 is a threshold corresponding to the error tolerance service 1.

For example, the RLC layer of the terminal device may generate, based on the group a1 to the group a10 included in the error-tolerant bit set 1, XMAC-I (a1), XMAC-I (a2), ..., XMAC-I (a10) respectively corresponding to the group a1 to the group a10. The group a1 is used as an example. The RLC layer of the terminal device may compare whether MAC-I (a1) is the same as XMAC-I (a1). If MAC-I (a1) is the same as XMAC-I (a1), a check value of the group a1 is 0, and in this case, a check result of the group a1 is that integrity check on the group a1 succeeds. If XMAC-I (a1) is different from MAC-I (a1), a check value of the group a1 is 1, and in this case, a check result of the group a1 is that integrity check on the group a1 fails. By analogy, the RLC layer of the terminal device may determine check values respectively corresponding to the group a1 to the group a10, and then use a sum of the check values respectively corresponding to the group a1 to the group a10 as a check value of the error-tolerant bit set 1.

Further, if the RLC PDU-1 corresponds to the error tolerance service 1, that is, bits in the error-tolerant bit set 1 belong to the error tolerance service 1, the RLC layer of the terminal device may use a threshold corresponding to the error tolerance service 1 as the threshold 1. The RLC layer of the terminal device may compare the check value of the error-tolerant bit set 1 with the threshold 1. If the check value of the error-tolerant bit set 1 does not reach the threshold 1, it may be determined that the integrity check on the error-tolerant bit set 1 succeeds. If the check value of the error-tolerant bit set 1 reaches the threshold 1, it may be determined that the integrity check on the error-tolerant bit set 1 fails. For specific implementation, refer to Implementation 1A and Implementation 2A in Embodiment 1.

S612. The RLC layer of the terminal device performs integrity check on the error-tolerant bit set 2 based on a threshold 2 and the check information 2 in the RLC PDU-2.

If the integrity check on the error-tolerant bit set 2 succeeds, the RLC layer of the terminal device sends feedback information 3b to the access network device, where the feedback information 3b indicates that transmission of the RLC PDU-2 succeeds. If the integrity check on the error-tolerant bit set 2 fails, the RLC layer of the terminal device sends feedback information 4b to the access network device, where the feedback information 4b indicates that the transmission of the RLC PDU-2 fails. If bits in the error-tolerant bit set 2 belong to an error tolerance service 2, the threshold 2 is a threshold corresponding to the error tolerance service 2. This embodiment is described by using an example in which the bits in the error-tolerant bit set 1 and the bits in the error-tolerant bit set 2 belong to different error tolerance services. In another possible example, the bits in the error-tolerant bit set 1 and the bits in the error-tolerant bit set 2 may also belong to a same error tolerance service.

For example, the RLC layer of the terminal device may generate, based on the group b1 to the group b10 included in the error-tolerant bit set 2, XMAC-I (b1), XMAC-I (b2), ..., XMAC-I (b10) respectively corresponding to the group b1 to the group b10. The group b1 is used as an example. The RLC layer of the terminal device may compare whether MAC-I (b1) is the same as XMAC-I (b1). If MAC-I (b1) is the same as XMAC-I (b1), a check value of the group b1 is 0, and in this case, a check result of the group b1 is that integrity check on the group b1 succeeds. If XMAC-I (b1) is different from MAC-I (b1), a check value of the group b1 is 1, and in this case, a check result of the group b1 is that integrity check on the group b1 fails. By analogy, the RLC layer of the terminal device may determine check values respectively corresponding to the group b1 to the group b10, and then use a sum of the check values respectively corresponding to the group b1 to the group b10 as a check value of the error-tolerant bit set 2.

Further, if the RLC PDU-2 corresponds to the error tolerance service 2, that is, bits in the error-tolerant bit set 2 belong to the error tolerance service 2, the RLC layer of the terminal device may use a threshold corresponding to the error tolerance service 2 as the threshold 2. The RLC layer of the terminal device may compare the check value of the error-tolerant bit set 2 with the threshold 2. If the check value of the error-tolerant bit set 2 does not reach the threshold 2, it may be determined that the integrity check on the error-tolerant bit set 2 succeeds. If the check value of the error-tolerant bit set 2 reaches the threshold 2, it may be determined that the integrity check on the error-tolerant bit set 2 fails.

In addition, the MAC layer of the terminal device may transfer a check result of the non-error-tolerant bit set to the physical layer of the terminal device, and the RLC layer of the terminal device may transfer a check result of the error-tolerant bit set 1 and a check result of the error-tolerant bit set 2 to the physical layer of the terminal device. If the physical layer of the terminal device determines that a check result of at least one of the error-tolerant bit set 1, the error-tolerant bit set 2, and the non-error-tolerant bit set is that the check fails, the physical layer of the terminal device may send the feedback information 2 to the access network device. If the physical layer of the terminal device determines that all the check results of the three items are that the check succeeds, the physical layer of the terminal device may send feedback information 1 to the physical layer of the access network device, where the feedback information 1 indicates that the transmission of the transport block succeeds.

**Embodiment 4**

In Embodiment 4, after receiving a first PDU, an access stratum of a terminal device may determine a distance between the first PDU and a second PDU, where the second PDU is a last successfully transmitted PDU before the first PDU. If the distance is less than or equal to a second threshold, the terminal device may determine that transmission of the first PDU succeeds. If the distance is greater than the second threshold, the terminal device may determine that the transmission of the first PDU is fails. The first PDU and the second PDU may be access stratum PDUs, for example, both are MAC PDUs, both are RLC PDUs, or both are PDCP PDUs. This is not specifically limited. The second threshold may be a quantitative indicator (for example, a semantic error tolerance distance) of an error tolerance capability. For details, refer to the descriptions of the first threshold.

In this way, a video service is used as an example. Because video smoothness is used as a performance evaluation indicator, a deviation between two consecutive frames of the video service is not excessively large. In this assumption, a distance between the first PDU and the second PDU is not excessively large. Therefore, whether the transmission of the first PDU succeeds may be determined based on the distance between the first PDU and the second PDU.

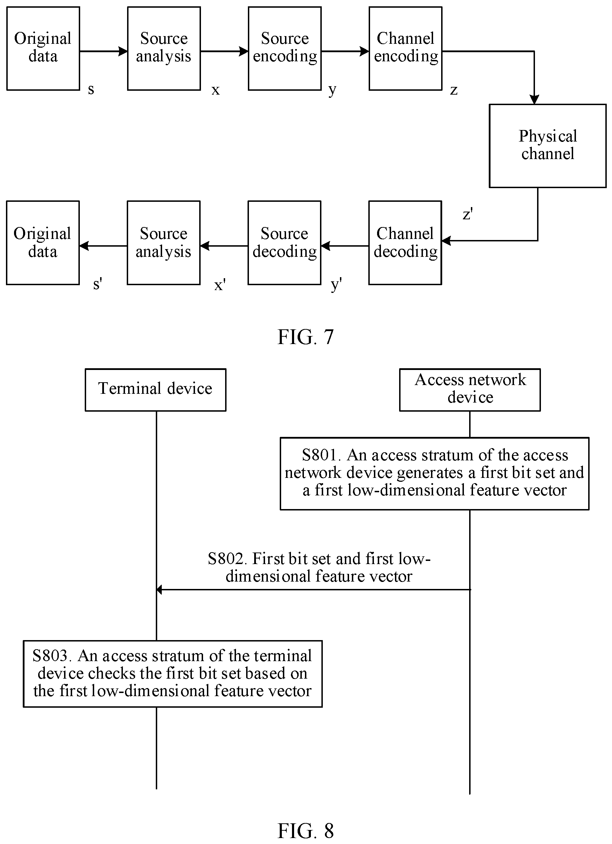

The following provides descriptions with reference to FIG. 7. As shown in FIG. 7, original data is represented by s. A semantic feature vector x is obtained through source analysis, and then y is obtained through source encoding. y is transmitted to an access stratum of an access network device through a bearer network, and a physical layer bit sequence z is obtained through channel encoding, and then is sent to a terminal device. The terminal device performs a reverse operation to obtain decoded data s'. Assuming that the transmission succeeds, s' = s.

According to the procedure shown in FIG. 7, in an example of original data s1 and s2, s1 is transmitted before s2. For the original data s1, x1 is obtained through source analysis on s1, y1 is obtained through source encoding, and z1 is obtained through channel encoding, and then transmitted to the terminal device through a physical channel. Correspondingly, the terminal device receives z1', obtains y1' through channel decoding, obtains x1' through source decoding, and obtains original data s1' through source analysis, where s1' = s1, that is, transmission of the original data s1 succeeds. Further, the terminal device may obtain an access stratum encoding result y1' (where y1' may be a PDU of an access stratum) by performing reverse encoding on the data s1 based on the successfully transmitted data s1'.

For the original data s2, x2 is obtained through source analysis on s2, y2 is obtained through source encoding, and z2 is obtained through channel encoding, and then transmitted to the terminal device through a physical channel. Correspondingly, the terminal device receives z2', and obtains y2' through channel decoding, and the terminal device may determine a distance between y1' and currently received y2'. If the distance is less than or equal to the second threshold, the terminal device may determine that transmission of y2' succeeds. If the distance is greater than the second threshold, the terminal device may determine that the transmission of y2' fails.

It may be understood that a specific implementation of determining whether the transmission of the data s1 succeeds is not limited in embodiments of this application. For example, if the data s1 is the 1st data packet, whether the transmission of the data s1 succeeds may be determined by using a conventional technology. If the data s1 is not the 1st data packet, whether the transmission of the data s1 succeeds may be determined based on last successfully transmitted data before the data s1.

In the foregoing method, the access stratum of the terminal device may determine, based on a distance between a last successfully transmitted PDU before the current PDU and the current PDU, whether the current PDU is successfully transmitted, so that a feedback delay or a retransmission delay is reduced while an error tolerance requirement is met, thereby improving user experience.

**Embodiment 5**

FIG. 8 is a schematic flowchart corresponding to a communication method according to an embodiment of this application. As shown in FIG. 8, the method includes the following steps.

S801. An access stratum of an access network device generates a first bit set and a first low-dimensional feature vector corresponding to the first bit set.

Herein, the first bit set may be an error-tolerant bit set, for example, the error-tolerant bit set 1 or the error-tolerant bit set 2 in Embodiment 3. The low-dimensional feature vector of the first bit set may be a similar (similarity, SIM) CRC (which may be represented as SIM_CRC).

The access stratum of the access network device generates the first low-dimensional feature vector in a plurality of manners. For example, the access stratum of the access network device may generate the first low-dimensional feature vector by using a principal component analysis (principal component analysis, PCA) method.

S802. The access stratum of the access network device sends the first bit set (the sent first bit set may be represented as y) and the first low-dimensional feature vector to a terminal device. Correspondingly, an access stratum of the terminal device receives the first bit set (the received first bit set may be represented as y') and the first low-dimensional feature vector.

For example, the access stratum of the access network device may separately send the first bit set and the first low-dimensional feature vector, or may send the first bit set and the first low-dimensional feature vector in an associated manner. To be specific, the first bit set and the first low-dimensional feature vector are encapsulated into a same transmission unit (for example, a transport block), and are sent to the terminal device together.

S803. The access stratum of the terminal device checks the first bit set based on the first low-dimensional feature vector.

For example, the access stratum of the terminal device generates a second low-dimensional feature vector based on the first bit set (that is, y'), and determines a distance between the second low-dimensional feature vector and the first low-dimensional feature vector. If the distance between the second low-dimensional feature vector and the first low-dimensional feature vector is greater than a third threshold, the access stratum of the terminal device may determine that transmission of the first bit set fails. If the distance is less than or equal to the third threshold, the access stratum of the terminal device may determine that the transmission of the first bit set succeeds. A second threshold may be a quantitative indicator (for example, a semantic error tolerance distance) of an error tolerance capability. For details, refer to the descriptions of the first threshold.

According to the foregoing method, the access stratum of the terminal device may determine, based on the first low-dimensional feature vector corresponding to the first bit set, whether the transmission of the first bit set succeeds, so that a feedback delay or a retransmission delay is reduced while an error tolerance requirement is met, thereby improving user experience.

For Embodiment 1 to Embodiment 5, it may be understood as follows:

(1) Embodiment 1 to Embodiment 5 are described by using an example in which the access network device is a transmit end and the terminal device is an access end. In another example, the terminal device may be a transmit end, and the access network device may be a receive end. When the terminal device is a transmit end, in the foregoing embodiments, for a parameter (for example, a quantity of groups) related to the transmit end, refer to the foregoing descriptions, or the parameter may be sent by the access network device to the terminal device via an RRC message (for example, an RRC reconfiguration message). When the access network device is a receive end, for a parameter (for example, a first threshold) used by the receive end in the foregoing embodiments, refer to the foregoing descriptions, or the parameter may be sent by the core network device to the access network device.

(2) The foregoing content focuses on the differences between Embodiment 1 to Embodiment 5. In the case of no mutual violation, cross-reference may be made between Embodiment 1 to Embodiment 5. In addition, in a same embodiment, cross-reference may also be made between different implementations or different examples.

(3) Step numbers in the flowcharts described in Embodiment 1 to Embodiment 5 are merely an example of an execution procedure, and do not constitute a limitation on an execution sequence of the steps. In embodiments of this application, there is no strict execution sequence between steps that do not have a time sequence dependency relationship with each other. In addition, not all steps shown in each flowchart are mandatory steps, and some steps may be added or deleted for each flowchart based on an actual requirement.

The foregoing mainly describes the solutions provided in embodiments of this application from a perspective of interaction between the terminal device and the access network device. It may be understood that, to implement the foregoing functions, the terminal device and the access network device may include corresponding hardware structures and/or software modules for performing the functions. A person skilled in the art should be easily aware that, in combination with units and algorithm steps of the examples described in embodiments disclosed in this specification, embodiments of this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional unit division may be performed on the terminal device and the access network device based on the foregoing method examples. For example, each functional unit may be obtained through division based on each corresponding function, or two or more functions may be integrated into one unit. The integrated unit may be implemented in a form of hardware, or may be implemented in a form of a software functional unit.

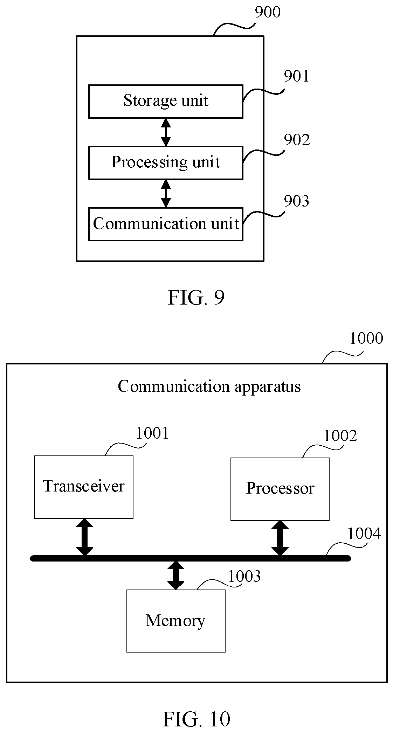

When the integrated unit is used, FIG. 9 is a possible example block diagram of an apparatus according to an embodiment of this application. As shown in FIG. 9, an apparatus 900 may include a processing unit 902 and a communication unit 903. The processing unit 902 is configured to control and manage an action of the apparatus 900. The communication unit 903 is configured to support communication between the apparatus 900 and another device. Optionally, the communication unit 903 is also referred to as a transceiver unit, and may include a receiving unit and/or a sending unit, respectively configured to perform a receiving operation and a sending operation. The apparatus 900 may further include a storage unit 901 that is configured to store program code and/or data of the apparatus 900.

(1) The apparatus 900 may be the receive end (for example, the terminal device) in the foregoing embodiments. The processing unit 902 may support the apparatus 900 in performing actions of the terminal device in the foregoing method examples. Alternatively, the processing unit 902 mainly performs an internal action of the terminal device in the method examples, and the communication unit 903 may support communication between the apparatus 900 and another device.

For example, in an embodiment, the communication unit 903 is configured to receive a first bit set, a second bit set, first check information, and second check information from a second device; and the processing unit 902 is configured to: perform integrity check on the first bit set based on the first check information and a first threshold; and perform integrity check on the second bit set based on the second check information.

In a possible design, the processing unit 902 is further configured to: obtain the first threshold or a plurality of thresholds from a non-access stratum of the first device, where the plurality of thresholds are used to determine the first threshold; or the communication unit 903 is further configured to: receive the first threshold or the plurality of thresholds from a core network device, or receive the first threshold or the plurality of thresholds from the second device.

In a possible design, the first bit set includes data bits of a plurality of services, and the plurality of thresholds include thresholds respectively corresponding to the plurality of services.

In a possible design, the processing unit 902 is specifically configured to: perform integrity check on the first bit set based on the first check information, to obtain a check value of the first bit set; and determine a check result of the first bit set based on the check value of the first bit set and the first threshold. If the check value of the first bit set does not reach the first threshold, the check result of the first bit set is that the integrity check on the first bit set succeeds; or if the check value of the first bit set reaches the first threshold, the check result of the first bit set is that the integrity check on the first bit set fails.

In a possible design, the first bit set includes a plurality of groups, the first check information includes check information respectively corresponding to the plurality of groups, and the plurality of groups include a first group; and the processing unit 902 is specifically configured to: perform integrity check on the first group based on the check information corresponding to the first group, to obtain a check value of the first group; and obtain the check value of the first bit set based on the check value of the first group.

In a possible design, the first check information is a padding bit sequence; and the processing unit 902 is specifically configured to: perform integrity check on the padding bit sequence, to obtain a check value of the padding bit sequence; and determine a check result of the first bit set based on the check value of the padding bit sequence and the first threshold. If the check value of the padding bit sequence does not reach the first threshold, the check result of the first bit set is that the integrity check on the first bit set succeeds; or if the check value of the padding bit sequence reaches the first threshold, the check result of the first bit set is that the integrity check on the first bit set fails.

In a possible design, the processing unit 902 is specifically configured to: perform integrity check on the second bit set based on the second check information, to obtain a check value of the second bit set; and determine a check result of the second bit set based on the check value of the second bit set. If the check value of the second bit set is a first check value, the check result of the second bit set is that the integrity check on the second bit set succeeds; or if the check value of the second bit set is a second check value, the check result of the second bit set is that the integrity check on the second bit set fails.

In a possible design, the communication unit 903 is specifically configured to receive a transport block from the second device, where the transport block includes the first bit set, the second bit set, the first check information, and the second check information.

In a possible design, the communication unit 903 is specifically configured to receive a transport block and check information from the second device, where the transport block includes the first bit set and the second bit set, and the check information includes the first check information and the second check information; or the transport block includes the first bit set, the second bit set, and the first check information, and the check information includes the second check information.

In a possible design, the communication unit 903 is further configured to: send first feedback information to the second device if the integrity check on the first bit set succeeds and the integrity check on the second bit set succeeds, where the first feedback information indicates that transmission of a protocol data unit PDU succeeds, and the PDU includes the first bit set; or send second feedback information to the second device if the integrity check on the first bit set fails or the integrity check on the second bit set fails, where the second feedback information indicates that the transmission of the PDU fails.

(2) The apparatus 900 may be the access network device in the foregoing embodiments. The processing unit 902 may support the apparatus 900 in performing actions of the access network device in the foregoing method examples. Alternatively, the processing unit 902 mainly performs an internal action of the access network device in the method examples, and the communication unit 903 may support communication between the apparatus 900 and another device.

For example, in an embodiment, the processing unit 902 is configured to generate first check information and second check information, where the first check information and a first threshold are used to perform integrity check on a first bit set, and the second check information is used to perform integrity check on a second bit set; and the communication unit 903 is configured to send the first bit set, the second bit set, the first check information, and the second check information.

In a possible design, the communication unit 903 is further configured to send the first threshold or a plurality of thresholds to the first device, where the plurality of thresholds are used to determine the first threshold.

In a possible design, the first bit set includes data bits of a plurality of services, and the plurality of thresholds include thresholds respectively corresponding to the plurality of services.

In a possible design, the first bit set includes a plurality of groups, and the first check information includes check information respectively corresponding to the plurality of groups; or the first check information is a padding bit sequence.

In a possible design, the communication unit 903 is specifically configured to send a transport block, where the transport block includes the first bit set, the second bit set, the first check information, and the second check information.

In a possible design, the communication unit 903 is specifically configured to send a transport block and check information, where the transport block includes the first bit set and the second bit set, and the check information includes the first check information and the second check information; or the transport block includes the first bit set, the second bit set, and the first check information, and the check information includes the second check information.

In a possible design, the first bit set includes a plurality of bits in a first data packet; and the communication unit 903 is further configured to receive the first data packet, where the first data packet includes indication information, and the indication information indicates locations of the plurality of bits in the first data packet.

In a possible design, the indication information is carried in a header of the first data packet.

It should be understood that division of the units in the foregoing apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. In an implementation process, operations in the foregoing methods or the foregoing units may be implemented by using a hardware integrated logic circuit in the processor element or may be implemented in a form in which the processing element invokes software.

In an example, a unit in any one of the foregoing apparatuses may be one or more integrated circuits configured to implement the foregoing methods, for example, one or more application-specific integrated circuits (application-specific integrated circuit, ASIC), one or more microprocessors (digital signal processor, DSP), one or more field programmable gate arrays (field programmable gate array, FPGA), or a combination of at least two of these forms of integrated circuits. For another example, when the units in the apparatus may be implemented in a form in which a processing element schedules a program, the processing element may be a processor, for example, a general-purpose central processing unit (central processing unit, CPU) or another processor that can invoke the program. For another example, the units may be integrated and implemented in a form of a SoC.

The foregoing unit configured for receiving is an interface circuit of the apparatus, and is configured to receive a signal from another apparatus. For example, when the apparatus is implemented in a manner of a chip, the receiving unit is an interface circuit that is of the chip and that is configured to receive a signal from another chip or apparatus. The foregoing unit configured for sending is an interface circuit of the apparatus, and is configured to send a signal to another apparatus. For example, when the apparatus is implemented in the manner of the chip, the sending unit is an interface circuit that is of the chip and that is configured to send a signal to another chip or apparatus.

Based on the foregoing embodiments, an embodiment of this application further provides a communication apparatus. Refer to FIG. 10. A communication apparatus 1000 may include a transceiver 1001 and a processor 1002. Optionally, the communication apparatus 1000 may further include a memory 1003. The memory 1003 may be disposed inside the communication apparatus 1000, or may be disposed outside the communication apparatus 1000. The processor 1002 may control the transceiver 1001 to receive and send a message, or the like.

Specifically, the processor 1002 may be a central processing unit (central processing unit, CPU), a network processor (network processor, NP), or a combination of a CPU and an NP. The processor 1002 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable logic gate array (field programmable gate array, FPGA), a generic array logic (generic array logic, GAL), or any combination thereof.

The transceiver 1001, the processor 1002, and the memory 1003 are interconnected. Optionally, the transceiver 1001, the processor 1002, and the memory 1003 are interconnected through a bus 1004. The bus 1004 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is for representing the bus in FIG. 10, but this does not mean that there is only one bus or only one type of bus.

In an optional implementation, the memory 1003 is configured to store a program and the like. Specifically, the program may include program code, and the program code includes computer operation instructions. The memory 1003 may include a RAM, and may further include a non-volatile memory (non-volatile memory), for example, one or more disk memories. The processor 1002 executes an application program stored in the memory 1003, to implement the foregoing function, thereby implementing a function of the communication apparatus 1000.

For example, the communication apparatus 1000 may be the transmit end (for example, the terminal device) in the foregoing embodiments, or may be the receive end (for example, the network device) in the foregoing embodiments.

In an embodiment, when the communication apparatus 1000 implements a function of the transmit end in the foregoing method embodiments, the transceiver 1001 may implement a receiving and sending operation performed by the transmit end in the foregoing method embodiments, and the processor 1002 may implement another operation, other than the receiving and sending operation, performed by the transmit end in the foregoing method embodiments. Specifically, for related specific descriptions, refer to related descriptions in the foregoing embodiments. Details are not described herein again.

In another embodiment, when the communication apparatus 1000 implements a function of the receive end in the foregoing method embodiments, the transceiver 1001 may implement a receiving and sending operation performed by the receive end in the foregoing method embodiments, and the processor 1002 may implement another operation, other than the receiving and sending operation, performed by the receive end in the foregoing method embodiments. Specifically, for related specific descriptions, refer to related descriptions in the foregoing embodiments. Details are not described herein again.

The terms "system" and "network" may be used interchangeably in embodiments of this application. "At least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A communication method, wherein the method is applicable to an access stratum of a first device, and the method comprises:

   receiving a first bit set, a second bit set, first check information, and second check information from a second device;
   performing integrity check on the first bit set based on the first check information and a first threshold; and
   performing integrity check on the second bit set based on the second check information.

2. The method according to claim 1, wherein the method further comprises:

   obtaining the first threshold or a plurality of thresholds from a non-access stratum of the first device, wherein the plurality of thresholds are used to determine the first threshold; or

receiving the first threshold or the plurality of thresholds from a core network device; or
receiving the first threshold or the plurality of thresholds from the second device.

3. The method according to claim 2, wherein the first bit set comprises data bits of a plurality of services, and the plurality of thresholds comprise thresholds respectively corresponding to the plurality of services.

4. The method according to any one of claims 1 to 3, wherein performing integrity check on the first bit set based on the first check information and the first threshold comprises:

    performing integrity check on the first bit set based on the first check information, to obtain a check value of the first bit set; and
    determining a check result of the first bit set based on the check value of the first bit set and the first threshold, wherein
    if the check value of the first bit set does not reach the first threshold, the check result of the first bit set is that the integrity check on the first bit set succeeds; or if the check value of the first bit set reaches the first threshold, the check result of the first bit set is that the integrity check on the first bit set fails.

5. The method according to claim 4, wherein the first bit set comprises a plurality of groups, the first check information comprises check information respectively corresponding to the plurality of groups, and the plurality of groups comprise a first group; and
    performing integrity check on the first bit set based on the first check information, to obtain the check value of the first bit set comprises:

    performing integrity check on the first group based on the check information corresponding to the first group, to obtain a check value of the first group; and
    obtaining the check value of the first bit set based on the check value of the first group.

6. The method according to any one of claims 1 to 3, wherein the first check information is a padding bit sequence; and
    performing integrity check on the first bit set based on the first check information and the first threshold comprises:

    performing integrity check on the padding bit sequence, to obtain a check value of the padding bit sequence; and
    determining a check result of the first bit set based on the check value of the padding bit sequence and the first threshold, wherein
    if the check value of the padding bit sequence does not reach the first threshold, the check result of the first bit set is that the integrity check on the first bit set succeeds; or if the check value of the padding bit sequence reaches the first threshold, the check result of the first bit set is that the integrity check on the first bit set fails.

7. The method according to any one of claims 1 to 6, wherein performing integrity check on the second bit set based on the second check information comprises:

    performing integrity check on the second bit set based on the second check information, to obtain a check value of the second bit set; and
    determining a check result of the second bit set based on the check value of the second bit set, wherein
    if the check value of the second bit set is a first check value, the check result of the second bit set is that the integrity check on the second bit set succeeds; or if the check value of the second bit set is a second check value, the check result of the second bit set is that the integrity check on the second bit set fails.

8. The method according to any one of claims 1 to 7, wherein receiving the first bit set, the second bit set, the first check information, and the second check information from the second device comprises:
    receiving a transport block from the second device, wherein the transport block comprises the first bit set, the second bit set, the first check information, and the second check information.

9. The method according to any one of claims 1 to 7, wherein receiving the first bit set, the second bit set, the first check information, and the second check information from the second device comprises:

    receiving a transport block and check information from the second device, wherein
    the transport block comprises the first bit set and the second bit set, and the check information comprises the first check information and the second check information; or the transport block comprises the first bit set, the second bit set, and the first check information, and the check information comprises the second check information.

10. The method according to any one of claims 1 to 9, wherein the method further comprises:

sending first feedback information to the second device if the integrity check on the first bit set succeeds and the integrity check on the second bit set succeeds, wherein the first feedback information indicates that transmission of a protocol data unit PDU succeeds, and the PDU comprises the first bit set; or
sending second feedback information to the second device if the integrity check on the first bit set fails or the integrity check on the second bit set fails, wherein the second feedback information indicates that the transmission of the PDU fails.

11. A communication method, wherein the method is applicable to an access stratum of a second device, and the method comprises:

generating first check information and second check information, wherein the first check information and a first threshold are used to perform integrity check on a first bit set, and the second check information is used to perform integrity check on a second bit set; and
sending the first bit set, the second bit set, the first check information, and the second check information.

12. The method according to claim 11, wherein the method further comprises:
sending the first threshold or a plurality of thresholds to the first device, wherein the plurality of thresholds are used to determine the first threshold.

13. The method according to claim 12, wherein the first bit set comprises data bits of a plurality of services, and the plurality of thresholds comprise thresholds respectively corresponding to the plurality of services.

14. The method according to any one of claims 11 to 13, wherein the first bit set comprises a plurality of groups, and the first check information comprises check information respectively corresponding to the plurality of groups; or
the first check information is a padding bit sequence.

15. The method according to any one of claims 11 to 14, wherein sending the first bit set, the second bit set, the first check information, and the second check information comprises:
sending a transport block, wherein the transport block comprises the first bit set, the second bit set, the first check information, and the second check information.

16. The method according to any one of claims 11 to 15, wherein sending the first bit set, the second bit set, the first check information, and the second check information comprises:

sending a transport block and check information, wherein
the transport block comprises the first bit set and the second bit set, and the check information comprises the first check information and the second check information; or the transport block comprises the first bit set, the second bit set, and the first check information, and the check information comprises the second check information.

17. The method according to any one of claims 11 to 16, wherein the first bit set comprises a plurality of bits in a first data packet; and
the method further comprises:
receiving the first data packet, wherein the first data packet comprises indication information, and the indication information indicates locations of the plurality of bits in the first data packet.

18. The method according to claim 17, wherein the indication information is carried in a header of the first data packet.

19. A communication apparatus, comprising a module configured to perform the method according to any one of claims 1 to 18.

20. A communication apparatus, comprising a processor, wherein the processor is coupled to a memory, the memory stores a computer program, and the processor is configured to invoke a part or all of the computer program in the memory, so that the method according to any one of claims 1 to 18 is performed.

21. A computer-readable storage medium, wherein the storage medium stores a computer program, and when a part or all of the computer program is executed by a computer, the method according to any one of claims 1 to 18 is performed.

22. A computer program product, wherein when a computer reads and executes the computer program product, the method according to any one of claims 1 to 18 is performed.

FIG. 1

FIG. 2A

GTP-U header

| Outer IP | UDP | GTP | Inner IP | TCP | Data |
|----------|-----|-----|----------|-----|------|

FIG. 2B

| Terminal device | Access network device |
|---|---|
| RRC layer · SDAP layer | SDAP layer · RRC layer |
| PDCP layer | PDCP layer |
| RLC layer | RLC layer |
| MAC layer | MAC layer |
| PHY layer | PHY layer |

Data transmission

Signaling transmission

FIG. 3A

| | IP data packet 1 | IP data packet 2 |
|---|---|---|
| SDAP | H · SDAP SDU 1 | H · SDAP SDU 2 |
| PDCP | H · PDCP SDU 1 | H · PDCP SDU 2 |
| RLC | H · RLC SDU 1 | H · RLC SDU 2 |
| MAC | H · MAC SDU 1 | H · MAC SDU 2 |

← MAC PDU (transport block) →

FIG. 3B

| Terminal device | | Access network device |
| --- | --- | --- |

S401. An access stratum of the access network device generates first check information and second check information

S402. First bit set, second bit set, first check information, and second check information

S403. An access stratum of the terminal device checks the first bit set based on the first check information and a first threshold

S404. The access stratum of the terminal device checks the second bit set based on the second check information

FIG. 4A

| Non-error-tolerant bit portion | Error-tolerant bit portion |
| --- | --- |

| Group 1 | Group 2 | Group 3 | Group 4 |
| --- | --- | --- | --- |

MAC-I 1    MAC-I 2    MAC-I 3    MAC-I 4

FIG. 4B

| Non-error-tolerant bit portion | Error-tolerant bit portion | Padding bit sequence |
|---|---|---|

FIG. 4C

| Access network device | | Terminal device | |
|---|---|---|---|
| MAC layer | Physical layer | Physical layer | MAC layer |

S501. Generate first check information and second check information

S502. Transport block

S503. Signal corresponding to the transport block

S504: Transport block

S505. Perform integrity check on a second bit set based on the second check information

S506. Perform integrity check on a first bit set based on a first threshold and the first check information

FIG. 5

Access network device

| RLC layer | MAC layer | Physical layer |

S601. Generate check information 1 for an error-tolerant bit set 1 in an RLC SDU-1

S602. RLC PDU-1

S603. Generate check information 2 for an error-tolerant bit set 2 in an RLC SDU-2

S604. RLC PDU-2

S605. Generate check information 3 for a non-error-tolerant bit set

S606: Transport block

S607: Signal corresponding to the transport block

Terminal device

| Physical layer | MAC layer | RLC layer |

S608: Transport block

S609. Perform integrity check on the non-error-tolerant bit set based on the check information 3

S610. RLC PDU-1 and RLC PDU-2

S611. Perform integrity check on the error-tolerant bit set 1 based on a threshold 1 and the check information 1

S612. Perform integrity check on the error-tolerant bit set 2 based on a threshold 2 and the check information 2

FIG. 6

Original data →[s]→ Source analysis →[x]→ Source encoding →[y]→ Channel encoding →[z]→ Physical channel

Original data ←[s']← Source analysis ←[x']← Source decoding ←[y']← Channel decoding ←[z']← Physical channel

FIG. 7

Terminal device

Access network device

S801. An access stratum of the access network device generates a first bit set and a first low-dimensional feature vector

S802. First bit set and first low-dimensional feature vector

S803. An access stratum of the terminal device checks the first bit set based on the first low-dimensional feature vector

FIG. 8

900

Storage unit     901

Processing unit     902

Communication unit     903

FIG. 9

1000

Communication apparatus

Transceiver    1001

Processor    1002

1004

Memory    1003

FIG. 10

# EP 4 770 187 A1

## INTERNATIONAL SEARCH REPORT

| International application No. |
|---|
| **PCT/CN2024/117841** |

**A.    CLASSIFICATION OF SUBJECT MATTER**

H04W 28/04(2009.01)i

According to International Patent Classification (IPC) or to both national classification and IPC

**B.    FIELDS SEARCHED**

Minimum documentation searched (classification system followed by classification symbols)

IPC：H04W

Documentation searched other than minimum documentation to the extent that such documents are included in the fields searched

Electronic data base consulted during the international search (name of data base and, where practicable, search terms used)

CNTXT: CNABS; ENTXTC; VEN; DWPI; CNKI; 3GPP: 容错, 阈值, 门限, 比特, 完整性, 保护, 校验, 业务, 不同, 分别, fault tolerance, threshold, bit, integrity, protection, check, service, different, respectively

**C.    DOCUMENTS CONSIDERED TO BE RELEVANT**

| Category* | Citation of document, with indication, where appropriate, of the relevant passages | Relevant to claim No. |
|---|---|---|
| X | CN 116456477 A (HUAWEI TECHNOLOGIES CO., LTD.) 18 July 2023 (2023-07-18) description, paragraphs [0006]-[0215] | 1-2, 8-12, 15-16, 19-22 |
| A | CN 109525542 A (ZTE CORP.) 26 March 2019 (2019-03-26) entire document | 1-22 |
| A | CN 115119198 A (SHANGHAI LANGBO COMMUNICATION TECHNOLOGY CO., LTD.) 27 September 2022 (2022-09-27) entire document | 1-22 |
| A | US 2022159507 A1 (GUANGDONG OPPO MOBILE TELECOMMUNICATIONS CORP., LTD.) 19 May 2022 (2022-05-19) entire document | 1-22 |
| A | WO 2021134680 A1 (HUAWEI TECHNOLOGIES CO., LTD.) 08 July 2021 (2021-07-08) entire document | 1-22 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **06 December 2024** | **17 December 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/117841**

| Patent document cited in search report | | | Publication date (day/month/year) | Patent family member(s) | | | Publication date (day/month/year) |
|---|---|---|---|---|---|---|---|
| CN | 116456477 | A | 18 July 2023 | WO | 2024199047 | A1 | 03 October 2024 |
| CN | 109525542 | A | 26 March 2019 | WO | 2019057023 | A1 | 28 March 2019 |
| CN | 115119198 | A | 27 September 2022 | WO | 2018170646 | A1 | 27 September 2018 |
| | | | | CN | 110268797 | A | 20 September 2019 |
| US | 2022159507 | A1 | 19 May 2022 | EP | 4017090 | A1 | 22 June 2022 |
| | | | | WO | 2021026728 | A1 | 18 February 2021 |
| | | | | CN | 114223247 | A | 22 March 2022 |
| WO | 2021134680 | A1 | 08 July 2021 | CN | 114902637 | A | 12 August 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311187960